(19)

**Europäisches Patentamt**
**European Patent Office**
**Office européen des brevets**

(11) **EP 4 717 100 A1**

(12) **EUROPEAN PATENT APPLICATION**

(43) Date of publication:
**01.04.2026 Bulletin 2026/14**

(21) Application number: **25201620.9**

(22) Date of filing: **11.09.2025**

(51) International Patent Classification (IPC):
**A24D 3/06** *(2006.01)*　　**A24D 3/10** *(2006.01)*
**B01D 39/18** *(2006.01)*　　**D01F 2/00** *(2006.01)*

(52) Cooperative Patent Classification (CPC):
**A24D 3/10; A24D 3/063; A24D 3/068; B01D 39/18; D01F 2/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.09.2024 KR 20240125044**

(71) Applicants:
• **Kolon Industries, Inc.**
　**Seoul 07793 (KR)**
• **KT&G Corporation**
　**Daedeok-gu**
　**Daejeon 34337 (KR)**

(72) Inventors:
• **PARK, Eun Young**
　**07793 Seoul (KR)**
• **JEONG, Jong Cheol**
　**07793 Seoul (KR)**

• **LEE, Jeong Hun**
　**07793 Seoul (KR)**
• **SEO, Seung Dong**
　**07793 Seoul (KR)**
• **HWANG, Yeong Nam**
　**07793 Seoul (KR)**
• **HWANG, Min Hee**
　**34337 Daejeon (KR)**
• **KI, Sung Jong**
　**34337 Daejeon (KR)**
• **MA, Kyeng Bae**
　**34337 Daejeon (KR)**
• **YANG, Jin Chul**
　**34337 Daejeon (KR)**
• **HA, Sung Hoon**
　**34337 Daejeon (KR)**

(74) Representative: **Isarpatent**
**Patent- und Rechtsanwälte**
**Barth Hassa Peckmann & Partner mbB**
**Friedrichstraße 31**
**80801 München (DE)**

(54) **LYOCELL DOPE, LYOCELL MATERIAL, FILTER FOR SMOKING ARTICLES, SMOKING ARTICLE, AND MANUFACTURING METHODS THEREOF**

(57)　The present application relates to a lyocell material, a filter for smoking articles, the filter including the lyocell material, and a smoking article including the filter. The lyocell material and the filter for smoking articles, according to the present application, may replace conventional cellulose acetate materials and filters for smoking articles including conventional cellulose acetate materials.

EP 4 717 100 A1

## Description

### Technical Field

The present application relates to a lyocell dope, a lyocell material, a filter including the same, a smoking article, and manufacturing methods thereof.

### Background Art

Until now, cellulose acetate fibers have been mainly used as cigarette filter materials. Cellulose acetate is known as a biodegradable material, but filters for smoking articles, which are made of cellulose acetate, remain in their original form for one to two years after being buried in soil, and it takes a considerable amount of time until they are completely biodegraded. Considering the amount and toxicity of tobacco products that are discarded and left in the living environment as well as tobacco products that are recovered as waste and landfilled after being used for smoking, it is necessary to further improve the biodegradability of filters for smoking articles. Accordingly, recently, a more environmentally friendly lyocell has been selected as a material to replace cellulose acetate.

### Disclosure of Invention

### Technical Problem

An object of the present application is to provide a lyocell dope having improved performance.

Another object of the present application is to provide a lyocell material that can replace commercially available cellulose acetate for filters for smoking articles.

Another object of the present application is to provide a lyocell material for filters for smoking articles of which manufacturing process is environmentally friendly and which has excellent biodegradability upon disposal.

Another object of the present application is to provide a lyocell filter for smoking articles.

Another object of the present application is to provide a smoking article (for example, cigarette) including a lyocell filter.

### Solution to Problem

According to aspects of the present application, there may provide a lyocell material, a filter including the same, a smoking article, and the like.

According to an aspect, there may be provided a lyocell dope including N-Methylmorpholine N-oxide (NMMO) and pulp dissoved in the NMMO, wherein the pulp has an angle of repose of 65° or less.

According to another aspect, there may be provided a lyocell material including a lyocell multifilament to which crimps are applied, wherein the lyocell multifilamenmt is obtained by spinning a lyocell dope according to any one of exemplary embodiments.

According to another aspect, there may be provided a lyocell filter for smoking articles, the filter including a lyocell dope according to any one of exemplary embodiments.

According to another aspect of the present application, there may be provided a smoking article including the lyocell material or the filter may be provided.

According to another aspect of the present application, there may be provided methods of manufacturing the lyocell material, and the filter including the same, and the smoking article.

In this specification, 'smoking article' may refer to an article capable of generating aerosols, such as a cigarette, cigar, etc. In this regard, the smoking article may include an aerosol-generating material or an aerosol-forming substrate. Additionally, the smoking article may include a solid material based on a tobacco raw material, such as leaf tobacco, cut tobacco, reconstituted tobacco, etc. In addition, the smoking article may include a volatile compound.

As used herein, the term "crimp" or "crimped" may refer to the waviness, curliness, or undulating configuration imparted to materials such as fibers, (mono)filaments, multifilaments and/or yarns, inherently and/or through mechanical, thermal, or chemical processes. A crimp may be characterized by periodic deviations from a straight linear axis along the length of the material, fiber, (mono)filament, multifilament and/or yarn. One crimp of a material, fiber, (mono)filament, multifilament and/or yarn may be defined as one repetition unit of said periodic deviation. The presence of crimp contributes to properties such as elasticity, bulk, resilience, and texture in the material and fabrics made from it.

As used herein the term "angle of repose" may refer to the steepest angle of descent or dip of a pulp relative to the horizontal plane on which the material can be piled without slumping. At this angle, the material on the slope face is on the verge of sliding. The angle of repose can range from 0° to 90°.

Unless otherwise specifically defined in this specification, when the properties of a lyocell material, a filter for smoking articles, or components or compositions related thereto are affected by temperature, the temperature at which such properties are determined or measured may be room temperature. In this case, the room temperature is a temperature which is not particularly decreased or increased, for example, may be a temperature of 10 °C to 35 °C, particularly 15 °C to 35 °C, 20 °C to 30 °C, or about 25 °C.

The present application relates to a lyocell material. The lyocell material may be used in smoking articles, and, although not particularly limited, the lyocell material may be used in filters for smoking articles.

Hereinafter, the disclosure of the present application will be described in more detail.

According to an aspect, there is provided a lyocell dope including N-Methylmorpholine N-oxide (NMMO) and pulp dissoved in the NMMO, wherein the pulp has an angle of repose of 65° or less.

In some embodiments, the angle of repose of the pulp may be 30° or more.

In some embodiments, the angle of repose may be a value measured before the pulp is dissolved in NMMO.

In some embodiments, the dispersity of the pulp may be 50% or less.

In some embodiments, the dispersity of the pulp may be 10% or more.

In some embodiments, the dispersity may be a value measured before the pulp is dissolved in NMMO.

In some embodiments, the floodability of the pulp included in the lyocell dope may be 80 or less.

In some embodiments, the floodability of the pulp included in the lyocell dope may be 40 or more.

In some embodiments, the flow rate non-uniformity of the pulp may be 15% or less.

In some embodiments, the angle of repose, dispersity, and floodability of the pulp is measured using a multi tester, for example a multi tester (model number: MT-02 (Measuring Instrument of Multi functional powder properties)) from Seishin Enterprise Co., Ltd. The angle of repose of the pulp may be determined according to DIN EN ISO 4324 (1983-12).

in order to determine the angle of repose, a predetermined amount of pulp may be allowed to fall freely to form a conical heap on a plate. Then, the height and base diameter of the heap is measured, and the angle of repose is calculated as the angle of inclination at which power naturally comes to rest. The angle of repose can serve as an index of flowability of the pulp. For instance, a larger angle of repose may indicate that the pulp tends to agglomerate or exhibits greater inter-particle friction, thereby signifying lower flowability.

The dispersity of the pulp can be determined as the mass ratio representing the extent to which the powder becomes dispersed under falling, impact, and/or airflow. More specifically, a predetermined pulp was dropped, and the fine fraction collected in a standard cylindrical or watch-glass type vessel can be weighed. Then, the dispersity can be calculated as the ratio of the collected fine fraction mass over the mass of the pulp. For instance, a higher dispersity value may indicate a greater tendency of the pulp to generate airborne dust or flushing during transferring or discharging.

The floodability can be expressed as an index indicating the tendency of the powder to suddenly overflow (flush) and/or spurt when subjected to stimuli such as vibration or air entrainment. To measure the Floodability, the pulp in bulk form may be observed for the degree to which it became abruptly dispersed or fluidized under such stimuli.

In one example, the floodability of pulp may be measured by allowing a predetermined amount of pulp to fall freely from a hopper, thereby forming a cone-shaped pile and enabling measurement of the angle of fall. A multi-tester may then apply vibration to the cone-shaped pile, whereby the angle of collapse can be determined. In addition, dispersibility of fine pulp particles, generated through air entrainment during the falling process, may also be measured. The flowability, the angle of fall, the difference between the angle of fall and the angle of collapse, and the dispersibility are each converted into individual indices, each having a maximum value of 25. The floodability can thus be defined as the sum of these indices.

Additionally, the average particle size of the pulp may be measured by a laser diffraction method, for example using a particle size analyzer from MALVEN (Model: Mastersizer 3000).

In one embodiment, the ground pulp may be subject to a pre-treatment step by drying in an oven, preferably at 100°C for about 6 hours. The pre-treatment step can be carried out in order to prevent agglomeration of the ground pulp caused by residual moisture.

The particle size analyzer is based on the principle of laser diffraction. In particular, the analyzer irradiates the sample with a laser beam, collects the light scattered by the particles using a detector, and interprets the resulting scattering pattern to calculate the particle size distribution. This method utilizes the principle that the scattering angle and intensity vary according to the particle size of the sample, thereby allowing quantification of the particle size distribution.

The average particle sizes may be expressed as the volume-weighted mean diameter, $D[4,3]$. Since $D[4,3]$ is calculated by assigning weights proportional to the particle volume, it is suitable for representing the overall ground pulp. Furthermore, because of its strong correlation with physical behavior and quality characteristics in actual manufacturing processes, $D[4,3]$ may be employed as the representative index of the average particle size in the present analysis.

In some embodiments, the flow rate non-uniformity of the pulp may be a value calculated according to Equation 1 below.

Flow rate non-uniformity = (maximum flow rate - minimum flow rate) / average flow rate $\times$ 100.　　　　[Equation 1]

An average flow rate, a minimum flow rate, and a maximum flow rate can calculated based on the measured hourly flow rate. Therefore, the hourly flow rate of pulp conveyed to a weight-loss feeder can be measured. The average flow rate is defined as a flow rate per unit time.

In some embodiments, the average particle size of the pulp may be 500 $\mu$m or less.

In some embodiments, the weight of the pulp may be 5 to 15 parts by weight with respect to 100 parts by weight of the total weight of the lyocell dope.

In some embodiments, the lyocell dope may further include water ($H_2O$).

In some embodiments, the weight of the pulp may be 5 to 15 parts by weight with respect to 100 parts by weight of the total weight of the lyocell dope.

In some embodiments, the weight of an aqueous NMMO solution may be 85 to 95 parts by weight with respect to 100 parts by weight of the total weight of the lyocell dope.

In some embodiments, the pressure non-uniformity of the lyocell dope may be 16% or less.

In some embodiments, the pressure non-uniformity of the lyocell dope may be value calculated according to Equation 2 below.

$$\text{Pressure non-uniformity} = (\text{maximum pressure} - \text{minimum pressure})/\text{average pressure} \times 100 \qquad [\text{Equation 2}]$$

In some embodiments, in the method of manufacturing a lyocell material, the aqueous NMMO solution may include NMMO in a weight ratio of 80 to 95 and $H_2O$ in a weight ratio of 5 to 20.

In addition, according to another aspect, there is provided a lyocell material including a lyocell multifilament to which crimps are applied, wherein the multifilament is obtained by spinning the lyocell dope as described in this application.

In some embodiments, the number of crimps may be 3.94 ea/cm (10 ea/inch) to 23.64 ea/cm (60 ea/inch).

In some embodiments, the number of crimps may be 9.84 ea/cm (25 ea/inch) to 19.68 ea/cm (50 ea/inch).

In some embodiments, the single fineness of the lyocell multifilament may be 1.67 dtex to 8.89 dtex (1.5 to 8.0 denier).

In some embodiments, the lyocell material may have a total fineness of 1,667 tex to 6,111 tex (15,000 to 55,000 denier).

In some embodiments, the fineness non-uniformity of the lyocell material may be 22% or less.

In some embodiments, the fineness non-uniformity of the lyocell material may be value calculated according to Equation 3 below.

$$\text{Fineness non-uniformity} = (\text{maximum fineness} - \text{minimum fineness})/\text{average fineness} \times 100 \qquad [\text{Equation 3}]$$

In Equation 3, the maximum fineness may be the largest value among the finenesses of sample, the minimum fineness may be the smallest value among the finenesses of sample, and the average fineness may be an average value of the finenesses measured from sample.

In some embodiments, the fineness measured from sample in Equation 3 may be calculated according to Equation 3-1 below.

$$[\text{Equation 3-1}]$$

$$\text{Fineness of sample} = \text{weight of sample (g)} \times 10000$$

The length of the sample may be about 90 cm.

The sample may be stabilized under constant temperature and constant humidity conditions before the fineness non-uniformity is calculated. For example, the constant temperature condition may be 20°C, and the constant humidity condition may be 65 %RH. Additionally, the stabilization may be performed for about 24 hours.

A load may be applied to the sample before the fineness non-uniformity is calculated. By applying a load, the sample to which crimps are applied may be further stabilized. For example, the load may be 2 kg.

In some embodiments, the lyocell material may be a lyocell tow.

In some embodiments, the lyocell material may be used for a filter for smoking articles.

In some embodiments, the lyocell material may not be used for clothing or tire cord.

Additionally, according to another aspect, there is provided a filter for smoking articles, the filter including any one of the lyocell materials as described in this application.

Additionally, according to another aspect, there is provided a smoking article including any one of the filters for smoking articles as described in the application.

Additionally, according to another aspect, there is provided a method of manufacturing a lyocell material, the method including: a lyocell dope preparation process; a lyocell dope spinning process; a coagulation and lyocell multifilament obtainment process; an oil treatment process; and a crimp application process, wherein floodability of pulp is 80 or less.

In some embodiments, the lyocell dope includes N-Methylmorpholine N-oxide (NMMO) and pulp dissolved in NMMO, wherein the angle of repose of the pulp may be 65° or less.

In some embodiments, the angle of repose of the pulp may be 30° or less.

In some embodiments, the angle of repose may be a value measured before the pulp is dissolved in NMMO.

In some embodiments, the dispersity of the pulp may be 50% or less.

In some embodiments, the dispersity of the pulp may be 10% or less.

In some embodiments, the dispersity may be a value measured before the pulp is dissolved in NMMO.

In some embodiments, the weight of the pulp may be 5 to 15 parts by weight with respect to 100 parts by weight of the total weight of the lyocell dope.

In some embodiments, the lyocell dope may further include water ($H_2O$).

In some embodiments, the weight of the pulp may be 5 to 15 parts by weight with respect to a total of 100 parts by weight of the lyocell dope.

In some embodiments, the weight of the aqueous NMMO solution may be 85 to 95 parts by weight with respect to a total of 100 parts by weight of the lyocell dope.

In some embodiments, the aqueous NMMO solution may include NMMO in a weight ratio of 80 to 95 and $H_2O$ in a weight ratio of 5 to 20.

In some embodiments, the lyocell material is obtained by spinning a lyocell dope having controlled characteristics. Specifically, the lyocell dope includes pulp whose angle of repose is adjusted to 65° or less. By adjusting the angle of repose to 65° or less, the flowability of the pulp is improved, thereby improving the concentration and viscosity uniformity of the lyocell dope containing the pulp.

As a result of improving the concentration and viscosity uniformity of the lyocell dope, the spinnability of the lyocell dope can be improved, and the uniformity of the lyocell monofilaments and lyocell multifilament obtained by the spinning of the lyocell dope can be improved. Furthermore, as the uniformity of the lyocell multifilament is improved, the uniformity and processability of the lyocell material including the lyocell multifilament can be improved.

On the other hand, when the angle of repose of the pulp is more than 65°, the uniformity of concentration and viscosity of the lyocell dope containing the pulp may deteriorate. For example, the flowability of the pulp dissolved in the lyocell dope as described above is reduced, and the lyocell dope has reduced concentration and viscosity uniformity, so that the dope extrusion pressure uniformity required for spinning may exceed 16%.

Additionally, the lyocell dope may include pulp whose dispersity is adjusted to 50% or less. Since the fugacity of the pulp increases as the dispersity of the pulp, by controlling the dispersity to 50% or less, the concentration and viscosity uniformity of the produced lyocell dope can be improved. Furthermore, the flowability of lyocell dope can be improved.

On the other hand, when the dispersity is more than 50%, the uniformity of the lyocell dope containing the pulp may deteriorate. More specifically, the concentration uniformity, viscosity uniformity, and flowability uniformity of the lyocell dope can be reduced. As a result, the stability of the spinning process is degraded, and the extrusion pressure uniformity of the dope may exceed 16%.

Additionally, the floodability of the pulp included in the lyocell dope can be adjusted to 80 or less. By adjusting the floodability, the fluidity of the lyocell dope can be maintained uniformly. As a result, the processability of the process of manufacturing the lyocell material using the lyocell dope can be improved.

More specifically, by using the lyocell dope as described above, the uniformity of spinning can be improved. As a result, the physical properties of the lyocell monofilaments and lyocell multifilament obtained by spinning the lyocell dope can be improved. For example, the uniformity of fineness of the lyocell monofilaments can be improved. Furthermore, the uniformity of the tensile strength of the lyocell material including the lyocell multifilament can be improved.

On the other hand, when the floodability is more than 80, the processability of the lyocell dope may further deteriorate. For example, the uniformity of flowability of the lyocell dope described above may deteriorate, and the non-uniformity of the pressure required for spinning may exceed 16%.

**[Non-circular cross-section]**

At least one of the lyocell monofilaments included in the lyocell material of the present application may have a non-circular cross-section. The "non-circular" means that the shape of the outline of a cross-section is not circular, and the "cross-section" may be a cross-section obtained by cutting the lyocell monofilament virtually or actually perpendicular to the length direction of the filament.

The outline of the non-circular cross-section may come into contact with an imaginary first circle and an imaginary second circle, respectively. Additionally, the imaginary second circle may be within the imaginary first circle.

The imaginary first circle may be a circle having the smallest area value among the circles drawn to completely encompass one cross-section of a monofilament. The imaginary second circle may be a circle having the largest area value among the circles drawn within the cross section of the monofilament.

When a circumcircle including the cross section of the monofilament can be drawn, the imaginary first circle may be the above-described circumscribed circle. When an incircle can be drawn within the cross section of the monofilament, the imaginary second circle may be the above-described inscribed circle.

The non-circular cross-section may have a shape including a plurality of protrusions, for example, a Y-shaped cross-section including three protrusions. It can be understood that the plurality of protrusions are formed integrally with the imaginary second circle as a center and that their ends are in contact with the imaginary first circle.

The non-circularity of a monofilament may be defined by Equation 1 below.

<Equation 1>

$$\text{Non-circularity} = r1/r2$$

Here, r1 is a radius of the imaginary first circle, and r2 is a radius of the imaginary second circle.

For example, the radius of the imaginary first circle may be 4 μm to 40 μm, the radius of the imaginary second circle may be 2 μm to 14 μm, and the non-circularity may be 1.01 to 10.

Additionally, the space occupancy of a monofilament may be defined by the following Equation 2.

<Equation 2>

$$\text{Space occupancy} = (S1/S2) \times 100(\%)$$

Here, S1 is an area of the imaginary first circle, and S2 is a cross-sectional area of a monofilament included in a lyocell fiber.

For example, the space occupancy of a monofilament having a non-circular cross-section may be 120 % to 600 %.

**[Fineness]**

The lyocell material of the present application includes a lyocell multifilament, and the lyocell multifilament may have a fineness suitable for manufacturing a filter for smoking articles and securing its function.

For example, the single fineness of a filament forming the lyocell multifilament may be 1.67 to 8.89 dtex (1.5 to 8.0 denier). In this case, the single fineness of the filament refers to a fineness of one monofilament separated from the lyocell multifilament. In other words, the single fiber fineness of a filament constituting the lyocell multifilament refers to the monofilament fineness.

The single fineness of the filament may be, for example, 8.33 dtex (7.5 denier) or less, 7.78 dtex (7.0 denier) or less, 7.22 dtex (6.5 denier) or less, 6.67 dtex (6.0 denier) or less, 6.11 dtex (5.5 denier) or less, 5.56 dtex (5.0 denier) or less, 5.00 dtex (4.5 denier) or less, 3.89 dtex (3.5 denier) or less, 3.33 dtex (3.0 denier) or less, 2.78 dtex (2.5 denier) or less, or 2.22 dtex (2.0 denier). Further, the lower limit thereof may be, for example, 2.22 dtex (2.0 denier) or more, 2.78 dtex (2.5 denier) or more, 3.33 dtex (3.0 denier) or more, 3.89 dtex (3.5 denier) or more, 4.44 dtex (4.0 denier) or more, 5.00 dtex (4.5 denier) or more, 5.56 dtex (5.0 denier) or more, 6.11 dtex (5.5 denier) or more, 6.67 dtex (6.0 denier) or more, 7.22 dtex (6.5 denier) or more, or 7.78 dtex (7.0 denier) or more. Satisfying the above range may be more advantageous in securing stable physical properties (e.g., hardness or suction resistance implementation, etc.) and processability of a filter for smoking articles.

For example, the total fineness of the lyocell material may be 1,667 to 6,111 tex (15,000 to 55,000 denier), and the total fineness of the lyocell material may be calculated as the sum of the finenesses of the lyocell monofilaments. For example, the lower limit of the total fineness may be, for example, 1,778 tex (16,000 denier) or more, 1,833 tex (16,500 denier) or more, 1,889 tex (17,000 denier) or more, 1,944 tex (17,500 denier) or more, 2,000 tex (18,000 denier) or more, 2,056 tex (18,500 denier) or more, 2,111 tex (19,000 denier) or more, 2,167 tex (19,500 denier) or more, 2,222 tex (20,000 denier) or more, 2,278 tex (20,500 denier) or more, 2,333 tex (21,000 denier) or more, 2,389 tex(21,500 denier) or more, 2,444 tex(22,000 denier) or more, 2,500 tex(22,500 denier) or more, 2,556 tex(23,000 denier) or more, 2,611 tex(23,500 denier) or more, 2,667 tex(24,000 denier) or more, 2,722 tex(24,500 denier) or more, 2,778 tex(25,000 denier) or more, 2,833 tex(25,500 denier) or more, 2,889 tex(26,000 denier) or more, 2,944 tex(26,500 denier) or more, 3,000 tex(27,000 denier) or more, 3,056 tex(27,500 denier) or more, 3,111 tex(28,000 denier) or more, 3,167 tex(28,500 denier) or more, 3,222 tex(29,000 denier) or more, 3,287 tex(29,500 denier) or more, 3,333 tex(30,000 denier) or more, 3,389 tex(30,500 denier) or more, 3,444 tex(31,000 denier) or more, 3,500 tex(31,500 denier) or more, 3,556 tex(32,000 denier) or more, 3,611 tex(32,500 denier) or more, 3,667 tex(33,000 denier) or more, 3,722 tex(33,500 denier) or more, 3,778 tex(34,000 denier) or more, 3,833 tex(34,500 denier) or more, 3,889 tex(35,000 denier) or more, 3,944 tex(35,500 denier) or more, 4,000 tex(36,000 denier) or more, 4,056 tex(36,500 denier) or more, 4,111 tex(37,000 denier) or more, 4,167 tex(37,500 denier) or more, 4,222 tex(38,000 denier) or more, 4,278 tex(38,500 denier) or more, 4,333 tex(39,000 denier) or more, 4,389 tex(39,500 denier) or more, 4,444 tex(40,000 denier) or more, 4,500 tex(40,500 denier) or more, 4,556 tex(41,000 denier) or more, 4,611 tex(41,500 denier) or more, 4,667 tex(42,000 denier) or more, 4,722 tex(42,500 denier) or more, 4,778 tex(43,000 denier) or more, 4,833 tex(43,500 denier) or more, 4,889 tex(44,000 denier) or more, 4,944 tex(44,500 denier) or more, 5,000 tex(45,000 denier) or more, 5,056 tex(45,500 denier) or more, 5,111 tex(46,000 denier) or more, 5,167 tex(46,500 denier) or more, 5,222 tex(47,000 denier) or more, 5,278 tex(47,500 denier) or more, 5,333 tex(48,000 denier) or more, 5,389 tex(48,500 denier) or more, 5,444 tex(49,000 denier) or more, 5,500 tex(49,500 denier) or more, 5,556 tex(50,000 denier) or more, 5,611 tex(50,500 denier) or more, 5,667 tex(51,000 denier) or more, 5,722 tex(51,500 denier) or more, 5,778 tex (52,000 denier) or more, 5,833 tex (52,500 denier) or more, 5,889 tex (53,000 denier) or more, 5,944 tex (53,500 denier) or more, 6,000 tex (54,000 denier) or more, or 6,056 tex (54,500 denier) or more. Further, the upper limit thereof may be, for example, 6,056 tex (54,500 denier) or less, 6,000 tex (54,000 denier) or less, 5,944 tex (53,500 denier) or less, 5,889 tex (53,000 denier) or less, 5,833 tex (52,500 denier) or less, 5,778 tex (52,000 denier) or less, 5,722 tex (51,500 denier) or less, 5,667 tex (51,000 denier) or less, 5,611 tex (50,500 denier) or less, 5,556 tex (50,000 denier) or less, 5,500 tex (49,500 denier) or less, 5,444 tex(49,000 denier) or less, 5,389 tex(48,500 denier) or less, 5,333 tex(48,000 denier) or less, 5,278 tex (47,500 denier) or less, 5,222 tex(47,000 denier) or less, 5,167 tex(46,500 denier) or less, 5,111 tex(46,000 denier) or less, 5,056 tex(45,500 denier) or less, 5,000 tex(45,000 denier) or less, 4,944 tex(44,500 denier) or less, 4,889 tex(44,000 denier) or less, 4,833 tex(43,500 denier) or less, 4,778 tex (43,000 denier) or less, 4,722 tex (42,500 denier) or less, 4,667 tex (42,000 denier) or less, 4,611 tex (41,500 denier) or less, 4,556 tex (41,000 denier) or less, 4,500 tex (40,500 denier) or less, 4,444 tex (40,000 denier) or less, 4,389 tex (39,500 denier) or less, 4,333 tex (39,000 denier) or less, 4,278 tex (38,500 denier) or less, 4,222 tex (38,000 denier) or less, 4,167 tex (37,500 denier) or less, 4,111 tex (37,000 denier) or less, 4,056 tex (36,500 denier) or less, 4,000 tex (36,000 denier) or less, 3,944 tex (35,500 denier) or less, 3,889 tex (35,000 denier) or less, 3,833 tex (34,500 denier) or less, 3,778 tex (34,000 denier) or less, 3,722 tex (33,500 denier) or less, 3,667 tex (33,000 denier) or less, 3,611 tex (32,500 denier) or less, 3,556 tex (32,000 denier) or less, 3,500 tex (31,500 denier) or less, 3,444 tex (31,000 denier) or less, 3,389 tex (30,500 denier) or less, 3,333 tex (30,000 denier) or less, 3,278 tex (29,500 denier) or less, 3,222 tex (29,000 denier) or less, 3,167 tex (28,500 denier) or less, 3,111 tex (28,000 denier) or less, 3,056 tex (27,500 denier) or less, 3,000 tex (27,000 denier) or less, 2,944 tex (26,500 denier) or less, 2,889 tex (26,000 denier) or less, 2,833 tex (25,500 denier) or less, 2,778 tex (25,000 denier) or less, 2,722 tex (24,500 denier) or less, 2,667 tex (24,000 denier) or less, 2,611 tex (23,500 denier) or less, 2,556 tex (23,000 denier) or less, 2,500 tex (22,500 denier) or less, 2,444 tex (22,000 denier) or less, 2,389 tex (21,500 denier) or less, 2,333 tex (21,000 denier) or less, 2,278 tex (20,500 denier) or less, 2,222 tex (20,000 denier) or less, 2,167 tex (19,500 denier) or less, 2,111 tex (19,000 denier) or less, 2,056 tex (18,500 denier) or less, 2,000 tex (18,000 denier) or less, 1,944 tex (17,500 denier) or less, 1,889 tex (17,000 denier) or less, 1,833 tex (16,500 denier) or less, 1,778 tex (16,000 denier) or less, or 1,722 tex (15,500 denier) or less. When the total fineness is outside the above range, the processability of manufacturing a filter for smoking articles may not be good (continuous process by cutting is impossible), and when the amount of tow filling a filter wrapper during a process of manufacturing a filter for smoking articles may be too small or too large, it may be difficult to secure sufficient properties (e.g., hardness or suction resistance, etc.) of the filter.

Although there are no particular restrictions on the method of measuring fineness, for example, a 2 m sample is collected from the lyocell material to be measured, for example, a lyocell tow, and is left and stabilized in a room with a temperature condition of 20±2°C and a humidity condition of 65±4%RH for 24 hours. One end of the stabilized lyocell tow is fixed, and the other end thereof is provided with a 2 kg of weight. After the tow is maintained and stabilized for 5 seconds in an extended state due to a load, it is cut into 90 cm pieces to obtain a sample, and the weight of the sample (total fineness) is measured. According to a denier conversion method, the total fineness is calculated by multiplying the measured weight by 10,000. When the total fineness of the sample is divided by the number of monofilaments in the same, the single fineness of a monofilament in the sample is calculated. As described above, the total fineness of the lyocell multifilament may be determined by the single fineness of the monofilament and the number of crimps. In the present application, the single fineness and the number of crimps may be controlled, and the total fineness of the tow suitable for manufacturing a filter for smoking articles and securing its function may be secured.

**[Number of crimps]**

In some embodiments, the lyocell multifilament may have crimps of 3.94 to 23.62 per centimeter (10 to 60 per inch). The unit "ea/inch (ea/cm)" refers to the number of crimps per unit length (inch or rather cm), wherein the term "ea" refers to the number of crimps. For example, the number of crimps may be 5.91 ea/cm(15 ea/inch) or more, 7.87 ea/cm(20 ea/inch) or more, 9.84 ea/cm(25 ea/inch) or more, 11.81 ea/cm(30 ea/inch) or more, 13.78 ea/cm(35 ea/inch) or more, 15.75 ea/cm(40 ea/inch) or more, or 17.72 ea/cm(45 ea/inch) or more, and the upper limit thereof may be, for example, 17.72 ea/cm(45 ea/inch) or less, 15.75 ea/cm(40 ea/inch) or less, 13.78 ea/cm(35 ea/inch) or less, 11.81 ea/cm(30 ea/inch) or less, or 9.84 ea/cm(25 ea/inch) or less. The number of crimps and the uniformity thereof may be controlled through pressure and temperature conditions, etc., in the crimping process to be described below.

Although not particularly limited, the number of crimps may be measured using, for example, a single fiber property evaluation apparatus (for example, Favimat). Specifically, the manufactured lyocell material (preferably lyocell tow) sample may be left and stabilized for 24 hours under conditions of a temperature of 20±2°C and a humidity of 65±4%. A specimen may be collected from the stabilized sample without damaging the crimps. The collected specimen may be mounted on a dedicated jig with a length (gauge length) of 10 to 30 mm. At measurement, the initial load may be 0.45 g/tex (0.05 g/denier), and the crimp sensitivity at measurement may be 0.01 mm. The number of crimps may be measured under the above-described conditions (that is, temperature of 20±2°C, humidity of 65±4%).

Although not particularly limited, the lyocell material manufactured to satisfy the single fineness, total fineness, and/or the number of crimps, described above, may be used in smoking articles.

**[Binder]**

In some embodiments, the lyocell material may further include a binder. The binder may be present, for example, on the surface of the lyocell multifilament, or between the lyocell multifilaments (or between monofilaments). The binder may increase the hardness of a filter for smoking articles, thereby preventing a filter from being caught during a process of manufacturing a filter or a process of manufacturing a smoking article (for example, cigarette).

The type of a usable binder is not particularly limited, and any known binder may be used as long as it does not hinder the purpose of the present invention. For example, a binder providing sufficient compatibility with an oil used in the present application, improving the hardness of a filter, and providing excellent binding force may be used.

In some embodiments, the binder may include a polyester-based binder, a cellulosic-based binder, and/or a vinyl-based binder.

In some embodiments, a polyester-based binder including at least one selected from the group consisting of alkylene, arylene and heteroarylene, each having 5 to 12 carbon atoms, may be used.

Examples of the cellulose-based binder may include, but are not limited to, hydroxypropyl methyl cellulose (HPMC), ethyl cellulose (EC), methyl cellulose (MC), and/or carboxymethyl cellulose (CMC).

According to certain embodiments, the cellulose-based binder is selected from the group consisting of hydroxypropyl methyl cellulose (HPMC), ethyl cellulose (EC), methyl cellulose (MC), carboxymethyl cellulose (CMC), or a combination thereof.

Examples of the vinyl-based binder may include, but are not limited to, polyvinylpyrrolidone (PVP), polyvinyl alcohol (PVA), and/or ethylene vinyl acetate (EVAc). According to certain embodiments, the vinyl-based binder is selected from the group consisting of polyvinylpyrrolidone (PVP), polyvinyl alcohol (PVA), ethylene vinyl acetate (EVAc), or a combination thereof.

A method of applying (coating) the binder to a lyocell material will be described later.

[Oil]

In some embodiments, the lyocell material may include a lyocell multifilament; and an oil applied onto the lyocell multifilament. The oil includes (a) an esterification product of a fatty acid having 16 or more carbon atoms and an aliphatic monohydric alcohol; and (b) an esterification product of sorbitan and a fatty acid having 16 or more carbon atoms. This oil may be applied to some or all of monofilaments or multifilaments constituting the lyocell material. Additionally, the oil may penetrate among filaments.

The oil including at least the component (a) and the component (b) may have hydrophobicity. As a result, the lyocell material treated with the oil has excellent spreading properties.

In some embodiments, the lyocell material may include a preset content of the oil. In this case, the content of the oil may refer to OPU (wt%) to be described later. "OPU" may refer to "oil pick up ratio". In some embodiments, the lyocell material may include an oil in a content of 0.1 wt% or more based on 100 wt% of the total lyocell material. For example, the content of the oil may be 0.5 wt% or more, 1.0 wt% or more, 1.5 wt% or more, 2.0 wt% or more, 2.5 wt% or more, 3.0 wt% or more, specifically, 3.5 wt% or more, 4.0 wt% or more, 4.2 wt% or more, 4.5 wt% or more, 5.0 wt% or more, 5.5 wt% or more, 6.0 wt% or more, 6.5 wt% or more, 7.0 wt% or more, 7.5 wt% or more, 8.0 wt% or more, 8.5 wt% or more, 9.0 wt% or more, or 9.5 wt% or more. Further, the upper limit thereof may be, for example, 20.0 wt% or less, 18.0 wt% or less, 17.0 wt% or less, 16.0 wt% or less, 15.0 wt% or less, 14.5 wt% or less, 14.0 wt% or less, 13.5 wt% or less, 13.0 wt% or less, 12.5 wt% or less, 12.0 wt% or less, 11.5 wt% or less, 11.0 wt% or less, 10.5 wt% or less, 10 wt% or less, 9.5 wt% or less, 9.0 wt% or less, 8.5 wt% or less, 8.0 wt% or less, 7.8 wt% or less, or 7.6 wt% or less.

As a method of measuring the content (OPU) of the oil, for example, an extrusion method may be used. For example, a sample (e.g., 2 to 5 g, specifically about 2.5 g) is collected (in this case, the weight of the collected sample is referred to as a sample weight), and is introduced into a syringe-shaped container. The material of the container is not particularly limited, but may be SUS (stainless steel). Subsequently, a solvent (e.g., methanol) is introduce into the container containing the sample (the amount of the introduced solvent may be 10 ml or less (e.g., about 8 ml)). When adding the solvent to the sample, a dropping method may be used, and a dropping speed may be adjusted uniformly. And, as described above, the solvent introduced into the container is allowed to drop from one end of the syringe-shaped container onto a plate. In this case, the plate is pre-weighed (the weighed weight is referred to as plate weight A), and the plate is mounted so that the solvent dropped onto the plate can fly away (i.e., evaporate) at a temperature of 120°C to 130°C (e.g., 125°C). The introduction and dropping of the solvent are performed three times, and the sample is pressed once using a syringe-shaped container to apply pressure (e.g., 98 N/cm$^2$ (10 kgf/cm$^2$) or less, 49 N/cm$^2$ (5 kgf/cm$^2$) or less, or 20 to39 N/cm$^2$ (2-4 kgf/cm$^2$)) to the sample. This process allows the solvent and oil present in the sample to be sufficiently extruded. The sample is squeezed under pressure until no solvent comes out. Then, the plate is stored in a desiccator for 5 to 10 minutes, and the weight of the plate containing the sample (plate weight B) is measured. Then, the content of the oil is calculated according to Equation below.

<Equation>

Content of oil by extrusion (OPU, % or wt%)

= {(plate weight B − plate weight A)/(sample weight)} x 100

In addition, the lyocell material that serves as the standard for the content of the oil may be at least an oil-treated lyocell multifilament. For example, the lyocell material may be a lyocell multifilament to which a first oil treatment (as described below) has been applied, a lyocell multifilament to which a first oil treatment and a second oil treatment (as described below) have been applied, or a lyocell multifilament to which a binder treatment to be described below has been applied together with the above-described oil treatment. Additionally, the lyocell multifilament treated with an oil and/or a binder may be a lyocell multifilament to which crimps are applied.

In relation to the oil of the present application, the component (a) may be a compound that can function as a type of lubricant or oil, and may be a component that may be harmless to the human body enough to be used in food. The component (a) provides lubricity to fibers introduced into a crimper. When lubricity is insufficient, lyocells may clump together and not pass through the crimper, and when lubricity is too high, crimps may not form properly. Taking these functions into consideration, the content of the component (a) may be controlled as described below.

In relation to the component (a), the type of fatty acid having 16 or more carbon atoms forming the esterification product is not particularly limited. Fatty acids having 16 or more carbon atoms may be used as long as they provide esterification products that may be harmless to the human body to such a degree of being used in foods.

For example, as the fatty acids having 16 or more carbon atoms, saturated fatty acids and/or unsaturated fatty acids may be used.

In some embodiments, the fatty acid is selected from the group consisting of palmitic acid, margaric acid, stearic acid, nonadecylic acid, arachidic acid, palmitoleic acid, oleic acid, linoleic acid, and arachidonic acid.

Examples of saturated fatty acids may include palmitic acid (hexadecanoic acid, $CH_3(CH_2)_{14}COOH$), margaric acid (heptadecanoic acid, $CH_3(CH_2)_{15}COOH$), stearic acid (octadecanoic acid, $CH_3(CH_2)_{16}COOH$), nonadecylic acid (nonadecanoic acid, $CH_3(CH_2)_{17}COOH$), and arachidic acid (eicosanoic acid, $CH_3(CH_2)_{18}COOH$). However, the types of available saturated fatty acids are not limited thereto. According to certain embodiments the saturated fatty acid is selected from the group consisting of palmitic acid (hexadecanoic acid, $CH_3(CH_2)_{14}COOH$), margaric acid (heptadecanoic acid, $CH_3(CH_2)_{15}COOH$), stearic acid (octadecanoic acid, $CH_3(CH_2)_{16}COOH$), nonadecylic acid (nonadecanoic acid, $CH_3(CH_2)_{17}COOH$), arachidic acid (eicosanoic acid, $CH_3(CH_2)_{15}COOH$), or a combination thereof.

Examples of unsaturated fatty acids may include palmitoleic acid ($CH_3(CH_2)_5CH=CH(CH_2)_7COOH$), oleic acid ($CH_3(CH_2)_7CH=CH(CH_2)_7COOH$), linoleic acid ($C_{18}H_{32}O_2$), and arachidonic acid ($C_{20}H_{32}O_2$). However, the types of available unsaturated fatty acids are not limited thereto. According to certain embodiments the unsaturated fatty acid is selected from the group consisting of palmitoleic acid ($CH_3(CH_2)_5CH=CH(CH_2)_7COOH$), oleic acid ($CH_3(CH_2)_7CH=CH(CH_2)_7COOH$), linoleic acid ($C_{13}H_{32}O_2$), arachidonic acid ($C_{20}H_{32}O_2$), or combination thereof.

In some embodiments, the upper limit of the number of carbons of the fatty acid having 16 or more carbon atoms is not particularly limited, but may be, for example, 40 or less, 36 or less, 32 or less, 28 or less, 24 or less, or 20 or less.

In relation to the component (a), the type of aliphatic monohydric alcohol forming it is also not particularly limited. Aliphatic monohydric alcohols capable of providing esterification products that are harmless to the human body to such a degree of being used in foods may be used.

In some embodiments, saturated fatty alcohols or unsaturated fatty alcohols may be used, and they may have a linear or branched form.

In some embodiments, the number of carbon atoms of the aliphatic monohydric alcohol may be 1 to 40. The

EP 4 717 100 A1

number of carbon atoms of the aliphatic monohydric alcohol may be, for example, 4 or more, 8 or more, 12 or more, 16 or more, or 20 or more.

Examples of the aliphatic monohydric alcohols may include, but are not limited to, methanol, ethanol, butanol, lauryl alcohol, isotridecanol, and stearyl alcohol. In some embodiments, the aliphatic monohydric alcohol is selected from the group consisting of methanol, ethanol, butanol, lauryl alcohol, isotridecanol, and stearyl alcohol.

In some embodiments, as the component (a), an esterification product of isotridecanol and stearic acid (e.g., isotridecyl stearate) may be used. However, the types of available component (a) are not limited thereto.

As will be described below, the content of the component (a) included in the oil may be adjusted in consideration of the function of the oil or the function of the component (a).

The component (b), i.e., an ester of sorbitan and fatty acid having 16 or more carbon atoms, may be a compound that can function as a type of emulsifier, and may be a component that may be harmless to the human body to such a degree of being used in foods.

Since this component (b) has both hydrophilicity and hydrophobicity due to polyhydric alcohol (i.e., sorbitan), it enables the component (a) providing lubricity to fibers to be well dispersed in water to be described below. In addition, the components (a) and (b) used together not only increase the dispersibility of the oil as described above, but also lower the melting point of the oil, thereby ensuring the handling easiness and stability of the oil. Taking these functions into consideration, the content of the component (b) may be controlled as will be described below.

In relation to the component (b), the type of fatty acid having 16 or more carbon atoms forming it is not particularly limited. Fatty acids having 16 or more carbon atoms capable of providing esterification products that may be harmless to the human body to such a degree of being used in foods may be used.

In some embodiments, as the fatty acids having 16 or more carbon atoms, saturated fatty acids and/or unsaturated fatty acids may be used.

Examples of saturated fatty acids may include palmitic acid (hexadecanoic acid, $CH_3(CH_2)_{14}COOH$), margaric acid (heptadecanoic acid, $CH_3(CH_2)_{15}COOH$), stearic acid (octadecanoic acid, $CH_3(CH_2)_{16}COOH$), nonadecylic acid (nonadecanoic acid, $CH_3(CH_2)_{17}COOH$), and arachidic acid (eicosanoic acid, $CH_3(CH_2)_{18}COOH$). According to certain embodiments, the saturated fatty acid is selected from the group consisting of palmitic acid (hexadecanoic acid, $CH_3(CH_2)_{14}COOH$), margaric acid (heptadecanoic acid, $CH_3(CH_2)_{15}COOH$), stearic acid (octadecanoic acid, $CH_3(CH_2)_{16}COOH$), nonadecylic acid (nonadecanoic acid, $CH_3(CH_2)_{17}COOH$), arachidic acid (eicosanoic acid, $CH_3(CH_2)_{15}COOH$), or a combination thereof. However, the types of available saturated fatty acids are not limited thereto. In some embodiments, the fatty acid is selected from the group consisting of palmitic acid, margaric acid, stearic acid, nonadecylic acid, arachidic acid, palmitoleic acid, oleic acid, linoleic acid, and arachidonic acid.

Examples of unsaturated fatty acids may include palmitoleic acid ($CH_3(CH_2)_5CH=CH(CH_2)_7COOH$), oleic acid ($CH_3(CH_2)_7CH=CH(CH_2)_7COOH$), linoleic acid ($C_{18}H_{32}O_2$), and arachidonic acid ($C_{20}H_{32}O_2$). In certain embodiments, the unsaturated fatty acid is selected from the group consisting of palmitoleic acid ($CH_3(CH_2)_5CH=CH(CH_2)_7COOH$), oleic acid ($CH_3(CH_2)_7CH=CH(CH_2)_7COOH$), linoleic acid ($C_{13}H_{32}O_2$), arachidonic acid ($C_{20}H_{32}O_2$), or a combination thereof. However, the types of available unsaturated fatty acids are not limited thereto.

The upper limit of the number of carbons of the fatty acid having 16 or more carbon atoms is not particularly limited, but may be, for example, 40 or less, 36 or less, 32 or less, 28 or less, 24 or less, or 20 or less.

In some embodiments, as the component (b), an esterification product of sorbitan and oleic acid (e.g., sorbitan monooleate) may be used. However, the type of the available component (b) is not limited thereto.

The content of the component (b) may be adjusted in consideration of the function of the component (b) and the function of the oil as described above.

In some embodiments, the oil may include 20 to 60 parts by weight of an ester esterification product (b) of sorbitan and a fatty acid having 16 or more carbon atoms with respect to 100 parts by weight of an esterification product (a) of a fatty acid having 16 or more carbon atoms and an aliphatic monohydric alcohol.

For example, the oil of the present application may include the component (b) in a content of 25 parts by weight or more, 30 parts by weight or more, 35 parts by weight or more, 40 parts by weight or more, 45 parts by weight or more, or 50 parts by weight or more with respect to 100 parts by weight of the component (a). Further, the upper limit of the content of the component (b) with respect to 100 parts by weight of the component (a) may be, for example, 55 parts by weight or less, 50 parts by weight or less, 45 parts by weight or less, 40 parts by weight or less, 35 parts by weight or less, 30 parts by weight or less, or 25 parts by weight or less. When the above content range is satisfied, the surface of the lyocell multifilament or lyocell tow treated with the oil may have hydrophobicity.

In some embodiments, the oil may include 40 to 80 wt% of an esterification product (a) of a fatty acid having 16 or more carbon atoms and an aliphatic monohydric alcohol, based on 100 wt% of the total weight of the oil. For example, the content of the component (a) may be 45 wt% or more, 50 wt% or more, 55 wt% or more, 60 wt% or more, or 65 wt% or more, 70 wt% or more, or 75 wt% or more, based on 100 wt% of the total weight of the oil. Further, the upper limit of the content thereof may be, for example, 75 wt% or less, 70 wt% or less, 65 wt% or less, 60 wt% or less, 55 wt% or less, 50 wt% or less, or 45 wt% or less.

In some embodiments, the oil may include an excess amount of the component (a).

In some embodiments, the oil may include 15 to 55 wt% of an esterification product (b) of sorbitan and a fatty acid having 16 or more carbon atoms, based on 100 wt% of the total weight of the oil. Specifically, the content of the component (b) may be 20 wt% or more, 25 wt% or more, 30 wt% or more, 35 wt% or more, 40 wt% or more, 45 wt% or more, or 50 wt% or more, based on 100 wt% of the total weight of the oil. Further, the upper limit of the content thereof may be, for example, 50 wt% or less, 45 wt% or less, 40 wt% or less, 35 wt% or less, 30 wt% or less, or 25 wt% or less.

In some embodiments, the oil may further include water. A small amount of water may help emulsification.

The content of water is not particularly limited, but water may be included in the amount remaining after excluding the total content of components (a) and (b) from 100 wt% of the entire oil. The content of water in the oil (i.e., the remaining amount excluding the total content of the remaining components excluding water) may be, for example, 10 wt% or less, 9 wt% or less, 8 wt% or less, 7 wt% or less, 6 wt% or less, 5 wt% or less, 4 wt% or less, 3 wt% or less, 2 wt% or less, or 1 wt% or less. Further, the lower limit thereof may be, for example, 0 wt% or more, 0.1 wt% or more, 0.5 wt% or more, or 1 wt% or more.

## [Method of manufacturing lyocell material]

This application relates to a method of manufacturing a lyocell material. By this method, a lyocell material may be manufactured, and this lyocell may be used in smoking articles.

In some embodiments, the method of manufacturing a lyocell material includes lyocell dope preparing (lyocell dope preparation process), lyocell dope spinning (lyocell dope spinning process); coagulating (coagulation) and multifilament obtaining (multifilament obtainment process); washing (washing process); oil treating (oil treatment process); and crimping (crimp application process or rather crimp imparting). Further, the method of manufacturing a lyocell material may further include a binder treating (binder treatment process); and other steps (processes).

The oil treatment process may be performed before the crimp application process, after the crimp application process, or before and after the crimp application process.

The oil treatment process may be performed independently, for example, by spraying an oil of the above-described composition onto lyocell multifilaments or by immersing the lyocell multifilaments in the oil. The oil treatment process may be performed so that the content (e.g., OPU (wt%)) of the oil in the lyocell material satisfies a preset range as described above.

The crimp application process may be performed, for example, by applying steam and/or pressure to the lyocell multifilaments.

A method of manufacturing a lyocell material according to a specific embodiment of the present application, including an oil treatment process and a crimp application process, will be described in more detail below. The method of the present application may be performed by including one or more of the processes to be described below.

## [Lyocell dope]

According to an aspect, there is provided a lyocell dope including NMMO (N-Methylmorpholine N-oxide) and pulp dissolved in NMMO, wherein the pulp has an angle of repose of 65° or less.

By adjusting the angle of repose to 65° or less, the flowability of the pulp is improved, thereby improving the concentration and viscosity uniformity of the lyocell dope containing the pulp. As a result of improving the concentration and viscosity uniformity of the lyocell dope, the spinnability of the lyocell dope can be improved, and the uniformity of the lyocell monofilaments and lyocell multifilament obtained by the spinning of the lyocell dope can be improved. Furthermore, as the uniformity of the lyocell multifilament is improved, the processability of the lyocell multifilament can improved, and the uniformity and processability of the lyocell material including the lyocell multifilament can be improved.

On the other hand, when the angle of repose of the pulp is more than 65°, the uniformity of concentration and viscosity of the lyocell dope containing the pulp may deteriorate. For example, the flowability of the pulp dissolved in the lyocell dope as described above is reduced, and the lyocell dope has reduced concentration and viscosity uniformity, so that the dope extrusion pressure uniformity required for spinning may exceed 16%.

In some embodiments, the angle of repose of the pulp may be 64° or less, 63° or less, 62° or less, 61° or less, 60° or less, 59° or less, 58° or less, 57° or less, 56° or less, 55° or less, 54° or less, 53° or less, 52° or less, 51° or less, 50° or less, 49° or less, 48° or less, 47° or less, 46° or less, 45° or less, 44° or less, 43° or less, 42° or less, 41° or less, 40° or less, 39° or less, 38° or less, 37° or less, 36° or less, or 35° or less.

In some embodiments, the angle of repose of the pulp may be 30° or more. For example, the angle of repose of the pulp may be 31° or more, 32° or more, 33° or more, 34° or more, 35° or more, 36° or more, 37° or more, 38° or more, 39° or more, 40° or more, 41° or more, 42° or more, 43° or more, 44° or more, 45° or more, 46° or more, 47° or more, 48° or more, 49° or more, 50° or more, 51° or more, 52° or more, 53° or more, 54° or more, 55° or more, 56° or more, 57° or more, 58° or more, 59° or more, 60° or more.

In some embodiments, the angle of repose may be a value measured before the pulp is dissolved in NMMO.

In some embodiments, the dispersity of the pulp may be 50% or less.

In some embodiments, the lyocell dope may include pulp whose dispersity is adjusted to 50% or less. By adjusting the dispersity of the pulp to 50% or less, the fugacity of the pulp can be reduced. As a result, the uniformity of the lyocell dope can be improved, and the flowability of the lyocell dope can be improved.

On the other hand, when the dispersity more than 50%, the processability of the lyocell dope including the pulp may deteriorate. For example, the lyocell dope described above may have poor flowability uniformity, and may have a pressure non-uniformity of more than 16% required for spinning.

For example, the dispersity of the pulp may be 49% or less, 48% or less, 47% or less, 46% or less, 45% or less, 44% or less, 43% or less, 42% or less, 41% or less, 40% or less, 39% or less, 38% or less, 37% or less, 36% or less, 35% or less, 34% or less, 33% or less, 32% or less, 31% or less, 30% or less, 29% or less, 28% or less, 27% or less, 26% or less, 25% or less, 24% or less, 23% or less, 22% or less, 21% or less, 20% or less, 19% or less, 18% or less, 17% or less, 16% or less, 15% or less, 14% or less, 13% or less, 12% or less, or 11%.

In some embodiments, the dispersity of the pulp may be 10% or more. For example, the dispersity of the pulp may be 11% or more, 12% or more, 13% or more, 14% or more, 15% or more, 16% or more, 17% or more, 18% or more, 19% or more, 20% or more, 21% or more, 22% or more, 23% or more, 24% or more, 25% or more, 26% or more, 27% or more, 28% or more, 29% or more, 30% or more, 31% or more, 32% or more, 33% or more, 34% or more, 35% or more, 36% or more, 37% or more, 38% or more, 39% or more, or 40% or more.

In some embodiments, the dispersity may be a value measured before the pulp is dissolved in NMMO.

In some embodiments, the floodability of the pulp included in the lyocell dope may be 80 or less.

By using lyocell dope having a floodability of 80 or less, the uniformity of spinning can be improved. As a result, the physical properties of lyocell monofilament and lyocell multifilament obtained by spinning the lyocell dope can be improved. For example, the uniformity of fineness of lyocell monofilament can be improved. Furthermore, the uniformity of tensile strength of the lyocell material including the lyocell multifilament can be improved.

On the other hand, when the floodability is more than 80, the processability of the lyocell dope may further deteriorate. For example, the lyocell dope described above may have poor flowability uniformity, and may have a pressure non-uniformity of more than 16% required for spinning.

For example, the floodability of the pulp included in the lyocell dope may be 79 or less, 78 or less, 77 or less, 76 or less, 75 or less, 74 or less, 73 or less, 72 or less, 71 or less, 70 or less, 69 or less, 68 or less, 67 or less, 66 or less, 65 or less, 64 or less, 63 or less, 62 or less, 61 or less, 60 or less, 59 or less, 58 or less, 57 or less, 56 or less, 55 or less, 54 or less, 53 or less, 52 or less, or 51 or less.

In some embodiments, the floodability of the pulp included in the lyocell dope may be 40 or more. For example, the floodability may be 41 or more, 42 or more, 43 or more, 44 or more, 45 or more, 46 or more, 47 or more, 48 or more, 49 or more, 51 or more, 52 or more, 53 or more, 54 or more, 55 or more, 56 or more, 57 or more, 58 or more, 59 or more, 60 or more, 61 or more, 62 or more, 63 or more, 64 or more, 65 or more, 66 or more, 67 or more, 68 or more, 69 or more, 70 or more, 71 or more, 72 or more, 73 or more, 74 or more, 75 or more, 76 or more, or 77 or more.

In some embodiments, the average particle size of the pulp may be 500 $\mu$m or less. For example, the upper limit of the average particle size of the pulp may be 450 $\mu$m or less, 400 $\mu$m or less, 350 $\mu$m or less, 300 $\mu$m or less, or 250 $\mu$m or less.

In some embodiments, although not particularly limited, the average particle size of the pulp may be 50 $\mu$m or more. For example, the upper limit of the average particle size of the pulp may be 100 $\mu$m or more, 150 $\mu$m or more, 200 $\mu$m or more, 250 $\mu$m or more, 300 $\mu$m or more, or 350 $\mu$m or more.

In some embodiments, the flow rate non-uniformity of the pulp may be 15% or less. In some embodiments, the flow rate non-uniformity of the pulp may be a value calculated according to Equation 1 below.

Flow rate non-uniformity = (maximum flow rate - minimum flow rate)/average flow rate $\times$ 100          [Equation 1]

By adjusting the flow rate non-uniformity of the pulp to 15% or less, the solubility of the pulp can be maintained constant, and the uniformity of the lyocell dope including the pulp can be improved. In addition, by securing the uniformity of the lyocell dope, the uniformity of the lyocell multifilament obtained by spinning the lyocell dope can be improved.

For example, the flow rate non-uniformity of the pulp may be 15% or less, 14.5% or less, 14% or less, 13.5% or less, 13% or less, 12.5% or less, 12% or less, 11.5% or less, 11% or less, 10.5% or less, 10% or less, 9.5% or less, or 9% or less.

In some embodiments, the content of pulp in the lyocell dope may be 5 to 15 parts by weight based on 100 parts by weight of the total weight of the lyocell dope.

When the content of pulp is too low, it is difficult to implement the characteristics of lyocell fiber, and when the content thereof exceeds the above range, it is difficult to dissolve in a solvent. Considering this, the content of pulp in the lyocell dope may be 6 parts by weight or more, 7 parts by weight or more, 8 parts by weight or more, 9 parts by weight or more, or 10 parts by weight or more, and the upper limit may be, for example, 14 parts by weight or less, 13 parts by weight or less, 12 parts by weight or less, 11 parts by weight or less, 10 parts by weight or less, or 9 parts by weight or less.

In some embodiments, the weight of the pulp may be 5 to 15 parts by weight with respect to 100 parts by weight of the total weight of the lyocell dope.

In some embodiments, the lyocell dope may further include water ($H_2O$).

In some embodiments, the weight of the NMMO aqueous solution may be 85 to 95 parts by weight with respect to 100 parts by weight of the total weight of the lyocell dope.

In some embodiments, the lyocell dope may include a NMMO aqueous solution. The NMMO aqueous solution may include, for example, a weight ratio of NMMO of 80 to 95 and a weight ratio of $H_2O$ of 5 to 20, in consideration of the degree of dissolution of cellulose and the process temperature.

In some embodiments, the pulp may have an alpha cellulose content of 85 wt% to 97 wt% based on 100 wt% of the total pulp.

In some embodiments, the pulp may have a hemicellulose content of 1 wt% to 15 wt% based on 100 wt% of the total pulp. By adjusting the hemicellulose content within the above range, stable physical properties and processability of the lyocell material can be more easily secured.

In some embodiments, in an embodiment of the present application, the degree of polymerization (DPw) of the cellulose may be 600 to 1700. The polymerization degree may refer to the number of repeating units and/or monomeric units of the components (cellulose, hemicellulose, etc.) contained in the cellulose pulp. In particular, as used in this application, the term "polymerization degree" may refer to the number of monomeric units and/or repeating units in a macromolecule or polymer or oligomer molecule. The polymerization degree (DPw) may be given by $DPw = Mn/M0$ wherein Mn is the number-average molecular weight of the macromolecule or polymer or oligomer molecule and M0 is the molecular weight of the monomeric unit.

## <(a) Lyocell dope preparation process>

This process is a process of preparing a lyocell dope including lyocell cellulose (or pulp) and N-Methylmorpholine N-oxide (NMMO).

Commercially available cellulose acetate filters are pointed out as a major cause of microplastics. However, just as an amine oxide solvent used in the production of lyocell fibers is recyclable and is biodegradable even when it is discarded, a lyocell material does not generate any pollutants during its production process. Furthermore, since a lyocell material (lyocell tow) is biodegraded within a relatively short period of time and is removed, lyocell is a more environmentally friendly material than cellulose acetate.

In some embodiments, the content of pulp in the lyocell dope may be 5 to 15 wt% based on 100 wt% of the total weight of the lyocell dope. When the content of pulp is too small, it is difficult to implement the characteristics of lyocell fibers, and when the content of cellulose exceeds the above range, it is difficult to dissolve in a solvent. Considering this, the content of pulp in the lyocell dope may be 6 wt% or more, 7 wt% or more, 8 wt% or more, 9 wt% or more, or 10 wt% or more, based on 100 wt% of the total weight of the lyocell dope, and the upper limit thereof may be, for example, 14 wt% or less, 13 wt% or less, 12 wt% or less, 11 wt% or less, 10 wt% or less, or 9 wt% or less, based on 100 wt% of the total weight of the lyocell dope.

In some embodiments, the lyocell dope may further include water ($H_2O$).

In some embodiments, the weight of the NMMO aqueous solution may be 85 to 95 parts by weight with respect to 100 parts by weight of the total weight of the lyocell dope.

In some embodiments, the lyocell dope may include a NMMO aqueous solution. Taking into consideration degree of dissolution of cellulose and process temperature, the NMMO aqueous solution may include, for example, a weight ratio of 80 to 95 of NMMO and a weight ratio of 5 to 20 of water.

Additionally, in some embodiments, the pulp or cellulose may have an alpha cellulose content of 85 to 97 wt% with respect to 100 wt% of the total pulp.

In some embodiments, the pulp or cellulose may have a hemicellulose content of 1 wt% to 15 wt% based on 100 wt% of the total pulp. By controlling the content of hemicellulose within the above range, stable physical properties (e.g., hardness or suction resistance implementation) and processability of the lyocell material can be more easily secured.

Additionally, in some embodiments, the degree of polymerization (DPw) of the cellulose may be 600 to 1700. The degree of polymerization may be defined as described above.

In some embodiments, the lyocell dope includes N-Methylmorpholine N-oxide (NMMO) and pulp dissolved in NMMO, and the angle of repose of the pulp may be 65° or less, and the angle of repose of the pulp may be 30° or more. Additionally, in some embodiments, the angle of repose may be a value measured before the pulp is dissolved in NMMO. The description of the angle of repose is as described above.

In some embodiments, the dispersity of the pulp may be 50% or less, and the dispersity of the pulp may be 10% or more. Additionally, the dispersity may be a value measured before the pulp is dissolved in NMMO. The description of the dispersity is as described above.

In some embodiments, the pressure non-uniformity of the lyocell dope may be 16% or less. Additionally, the pressure non-uniformity of the lyocell dope may be a value calculated according to Equation 2.

$$\text{Pressure non-uniformity} = (\text{maximum pressure} - \text{minimum pressure})/\text{average pressure} \times 100 \qquad \text{[Equation 2]}$$

By adjusting the pressure non-uniformity of the lyocell dope to 16% or less, the uniformity of the lyocell multifilament obtained by spinning the lyocell dope can be improved. Additionally, by ensuring the uniformity of the lyocell multifilament, the uniformity of the lyocell material including the lyocell multifilament can be improved. For example, the lyocell material including the lyocell multifilament may have a uniform fineness.

For example, the pressure non-uniformity of the lyocell dope may be 16% or less, 15.5% or less, 15% or less, 14.5% or less, 14% or less, 13.5% or less, 13% or less, 12.5% or less, 12% or less, 11.5% or less, 11% or less, 10.5% or less, 10% or less, 9.5% or less, or 9% or less, 8.5% or less, 8% or less, or 7.5% or less.

### <(b) Lyocell dope spinning process>

This process is a process of spinning the prepared lyocell dope. In the spinning process, the shape of a spinneret for discharging the spinning dope is not particularly limited. For example, a donut-shaped spinneret may be used.

The nozzle temperature, specifically, spinning temperature of a spinneret may be appropriately selected by those skilled in the art. Considering that the viscosity of the lyocell dope may vary depending on the spinning temperature to result in poor discharging, the spinning temperature may be, for example, 100°C or lower to 120°C or lower, or 100°C or lower to 110°C or lower.

By using lyocell dope with a floodability of 80 or less, the uniformity of spinning can be improved. As a result, the physical properties of lyocell monofilament and lyocell multifilament obtained by spinning the lyocell dope can be improved. For example, the uniformity of fineness of lyocell monofilament can be improved. Furthermore, the uniformity of tensile strength of the lyocell material including the lyocell multifilament can be improved.

On the other hand, when the floodability of the lyocell dope is more than 80, the processability of the lyocell dope may further deteriorate. For example, the lyocell dope as described above may have poor fluidity, the aggregation of the lyocell dope may be observed during the spinning process, and the non-uniformity of the pressure required for spinning may exceed 16%.

For example, the floodability of the lyocell dope may be 79 or less, 78 or less, 77 or less, 76 or less, 75 or less, 74 or less, 73 or less, 72 or less, 71 or less, 70 or less, 69 or less, 68 or less, 67 or less, 66 or less, 65 or less, 64 or less, 63 or less, 62 or less, 61 or less, 60 or less, 59 or less, 58 or less, 57 or less, 56 or less, 55 or less, 54 or less, 53 or less, 52 or less, or 51 or less.

In some embodiments, the floodability of pulp included in the lyocell dope may be 40 or more. For example, the floodability thereof may be 51 or more, 52 or more, 53 or more, 54 or more, 55 or more, 56 or more, 57 or more, 58 or more, 59 or more, 60 or more, 61 or more, 62 or more, 63 or more, 64 or more, 65 or more, 66 or more, 67 or more, 68 or more, 69 or more, 70 or more, 71 or more, 72 or more, 73 or more, 74 or more, 75 or more, 76 or more, or 77 or more.

In some embodiments, the process of spinning the lyocell dope may be performed under controlled spinning conditions so that the single fineness of a filament may be 1.67 dtex to 8.89 dtex (1.5 denier to 8.0 denier) or less. For example, at least one spinning condition of the discharge amount and spinning speed of the lyocell dope may be appropriately controlled so that the single fineness of the filament included in the lyocell material satisfies 1.67 to 8.89 dtex (1.5 to 8.0 denier). In this case, the single fineness of a filament refers to the fineness of a single monofilament separated from a multifilament as described above.

The single fineness of the filament may be, for example, 8.33 dtex (7.5 denier) or less, 7.78 dtex (7.0 denier) or less, 7.22 dtex (6.5 denier) or less, 6.67 dtex (6.0 denier) or less, 6.11 dtex (5.5 denier) or less, 5.56 dtex (5.0 denier) or less, 5.00 dtex (4.5 denier) or less, 3.89 dtex (3.5 denier) or less, 3.33 dtex (3.0 denier) or less, 2.78 dtex (2.5 denier) or less, or 2.22 dtex (2.0 denier). Further, the lower limit of the single fineness thereof may be, for example, 2.22 dtex (2.0 denier) or more, 2.78 dtex (2.5 denier) or more, 3.33 dtex (3.0 denier) or more, 3.89 dtex (3.5 denier) or more, 4.44 dtex (4.0 denier) or more, 5.00 dtex (4.5 denier) or more, 5.56 dtex (5.0 denier) or more, 6.11 dtex (5.5 denier) or more, 6.67 dtex (6.0 denier) or more, 7.22 dtex (6.5 denier) or more, or 7.78 dtex (7.0 denier) or more. When the above range is satisfied, it may be more advantageous in implementing the stable suction resistance of a filter for smoking articles and ensuring the processibility of a filter for smoking articles.

In some embodiments, the fineness non-uniformity of the lyocell material may be 22% or less. Additionally, in some embodiments, the fineness non-uniformity may be a value calculated according to Equation 3 below. To calculate the fineness non-uniformity, a plurality of samples may be prepared from the lyocell material. The fineness of sample may be measured from the plurality of samples.

$$\text{Fineness non-uniformity} = (\text{maximum fineness} - \text{minimum fineness})/\text{average fineness} \times 100 \qquad \text{[Equation 3]}$$

In Equation 3, the maximum fineness may be the largest value among the finenesses of the samples, the minimum fineness may be the smallest value among the finenesses of the samples, and the average fineness may be an average value of the finenesses measured from the samples.

To calculate the fineness non-uniformity, 20 or more samples may be prepared from the lyocell material. Preferably, 50 or more samples may be prepared.

In the lyocell material according to each exemplary embodiment, in Equation 3, the fineness measured from the sample may be calculated according to Equation 3-1 below.

$$[\text{Equation 3-1}]$$

$$\text{Fineness of sample} = \text{weight of sample (g)} \times 10000$$

The length of the sample may be about 90 cm.

The sample may be stabilized under conditions of constant temperature and constant humidity before the fineness non-uniformity is calculated. For example, the constant temperature condition may be 20°C, and the constant humidity condition may be 65 %RH. Additionally, the stabilization may be performed for about 24 hours.

A load may be applied to the sample before the fineness non-uniformity is calculated. By applying a load, the sample to which crimps are applied may be further stabilized. For example, the load may be 2 kg.

The uniformity of a filter including the lyocell material can be improved by adjusting the fineness non-uniformity of the lyocell material to 22% or less. For example, the strength of a filter including the lyocell material can be improved, and the filtering performance of the filter can be improved.

For example, the fineness non-uniformity of the lyocell material may be 22% or less, 21.5, 21, 20.5, 20, 19.5, 19, 18.5, 18, 17.5, 17, 16.5, 16% or less, 15.5% or less, 15% or less, 14.5% or less, 14% or less, 13.5% or less, 13% or less, 12.5% or less, 12% or less, 11.5% or less, 11% or less, or 10.5% or less.

In addition, there is provided a lyocell material including a lyocell to which crimps are applied, wherein the lyocell multifilament is obtained by spinning the lyocell dope as described in this application.

The lyocell dope discharged through the spinneret may undergo a coagulating process to be described later.

### <(c) Coagulation and multifilament obtainment process>

In this process, the spun lyocell dope is coagulated, and lyocell multifilaments may be obtained.

For the coagulation, a method in which the lyocell dope comes into contact with air and/or a coagulation liquid may be used.

In some embodiments, the coagulation may include a first coagulation process of supplying cooling air to the spun lyocell dope; and a second coagulation process of coagulating the first-coagulated lyocell dope by adding the same to a coagulation liquid.

According to the coagulation process, the lyocell dope discharged from the spinneret may be first coagulated in the space (air gap section) between the spinneret and a coagulation tank. This air gap section may be supplied with cooling air from an air-cooling unit located inside the spinneret to the inside to outside of the spinneret. In addition, the first coagulation may be achieved by the so-called air quenching method or means known in the related field.

For example, the upper temperature limit of the cooling air used for the first coagulation may be, for example, 15 °C or less. For example, the cooling air may be air having a temperature of 14 °C or less, 13 °C or less, 12 °C or less, 11 °C or less, or 10 °C or less. When the temperature is exceeded, the coagulation of the lyocell dope by air may not be sufficient, and the spinning-related processability may not be good.

The lower temperature limit of the cooling air may be determined in consideration of spinning processability and/or cross-sectional uniformity of a filament. For example, when the temperature of the cooling air is lower than 4°C, the surface of the spinneret may cool, the surface of the filament may become uneven, and the spinning processability may also deteriorate. In consideration of this, the temperature of the cooling air may be, for example, 5 °C or more, 6 °C or more, 7 °C or more, 8 °C or more, or 9 °C or more.

The degree to which the cooling air is supplied may be controlled in consideration of sufficient coagulation, spinning processability, and influence on the physical properties of the filament. For example, the cooling air may be supplied to the discharged lyocell dope at an air flow rate of 70 to 400 $Nm^3$/h. For example, the air flow rate may be 100 $Nm^3$/h or more, 150 $Nm^3$/h or more, 200 $Nm^3$/h or more or 250 $Nm^3$/h or more, and the upper limit of the air flow rate may be,

for example, 350 Nm$^3$/h or less, 300 Nm$^3$/h or less, 250 Nm$^3$/h or less, 200 Nm$^3$/h or less or 150 Nm$^3$/h or less.

After the first coagulation process, the cooled lyocell dope may be supplied to a coagulation tank or bath containing a coagulation liquid (second coagulation process). For appropriate coagulation to proceed, the temperature of the coagulation liquid may be, for example, 30 °C or less or 25 °C or less. Further, the temperature of the coagulation liquid may be, for example, 10 °C or more, 15 °C or more, or 20 °C or more. When the temperature is maintained, a coagulation rate may be appropriately maintained.

The type of the coagulation liquid for the second coagulation as described above is not particularly limited. For example, the coagulation liquid may include at least one of water and NMMO.

Although not particularly limited, when the coagulation liquid includes water and NMMO, based on 100 wt% of the total weight of the coagulation liquid, the content of water in the coagulation liquid may be 60 to 90 wt%, and the content of NMMO in the coagulation liquid may be 10 to 40 wt%. Alternatively, the coagulation liquid may include 70 to 80 wt% of water and 20 to 30 wt% of NMMO based on 100 wt% of the total weight of the coagulation liquid. The concentration of this coagulation liquid may be controlled to be maintained during the manufacturing process using sensors, etc.

### <(d) Washing process>

If necessary, the lyocell multifilament may be washed after the above-described coagulation and obtaining multifilament process. NMMO and/or other impurities remaining in the filament may be removed by this washing.

The method of performing the washing is not particularly limited. For example, the washing may be performed by introducing the coagulated lyocell multifilaments into a washing tank using a towing roller. Alternatively, the washing may be performed by spraying a washing liquid during the procedure of moving to the next process by a towing roller.

The components of the washing liquid is not particularly limited. For example, the washing liquid may include water, and may further include known additives.

Further, in consideration of reuse after washing, etc., the washing liquid may be used at a temperature of 100 °C or lower.

### <(e) Oil treatment process>

If necessary, a process of treating the lyocell multifilaments with an oil may be performed. This process is a process of applying the above-described oil to the surface of a filament. Through the oil treatment, friction applied to the filament may be reduced, and crimps may be formed well in the crimp application process to be described later. When the oil treatment is performed twice or more as described below, it may be called first oil treatment and second oil treatment depending on the order.

Although not particularly limited, the oil treatment may be performed by immersing the lyocell multifilament in a bath filled with the oil so that the lyocell multifilaments are completely immersed in the oil. Alternatively, the oil may be treated by spraying an oil liquid during the procedure of moving to the next process by a towing roller.

In order to ensure that the amount of the oil applied to the lyocell multifilament after the oil treatment as described above is constant, an additional process may be performed in which a roll or the like positioned before and/or after the oil treatment process squeezes out the oil from the surface of the lyocell multifilament.

In some embodiments, the oil treatment may be performed such that the content of the oil (OPU: oil pick up ratio (weight %)) is 1.0 weight % or more based on 100 wt % of the at least oil-treated lyocell multifilament. In this case, the at least oil-treated lyocell multifilament may be, for example, a lyocell multifilament to which first oil treatment has been applied, a lyocell multifilament to which first oil treatment and second oil treatment (refer to the description below) have been applied, or a lyocell multifilament to which a binder to be described below has been applied together with the above-described oil treatment. Further, the lyocell multifilament treated with an oil and/or a binder as described above may be a lyocell multifilament to which crimps are applied.

Specifically, the content of the oil in the at least oil-treated lyocell multifilament may be 0.5 wt% or more, 1.0 wt% or more, 1.5 wt% or more, 2.0 wt% or more, 2.5 wt% or more, 3.0 wt% or more, specifically, 3.5 wt% or more, 4.0 wt% or more, 4.2 wt% or more, 4.5 wt% or more, 5.0 wt% or more, 5.5 wt% or more, 6.0 wt% or more, 6.5 wt% or more, 7.0 wt% or more, 7.5 wt% or more, 8.0 wt% or more, 8.5 wt% or more, 9.0 wt% or more or 9.5 wt% or more. Further, the upper limit thereof may be, for example, 20.0 wt% or less, 18.0 wt% or less, 17.0 wt% or less, 16.0 wt% or less, 15.0 wt% or less, 14.5 wt% or less, 14.0 wt% or less, 13.5 wt% or less, 13.0 wt% or less, 12.5 wt% or less, 12.0 wt% or less, 11.5 wt% or less, 11.0 wt% or less, 10.5 wt% or less, 10 wt% or less, 9.5 wt% or less, 9.0 wt% or less, 8.5 wt% or less, 8.0 wt% or less, 7.8 wt%, or 7.6 wt% or less, with respect to 100 wt% of the total weight of the lyocell multifilament which has been at least treated with the emulsion. In this case, the above content may refer to a dry weight after a solvent (e.g., water) or liquid component that may be included in the oil has evaporated.

When the above-described oil is treated within the above content range, the hydrophilic properties of the lyocell material can be supplemented.

In some embodiments, drying of the oil may be performed after the above-described oil treatment.

In some embodiments, one or more of the above-described processes may be controlled so that the single fineness of filaments forming the lyocell multifilament may be 1.67 to 8.89 dtex (1.5 to 8.0 denier). The single fineness of the filament refers to a fineness of a single monofilament separated from a multifilament as described above.

For example, the single fineness of the filament may be, for example, 8.33 dtex (7.5 denier) or less, 7.78 dtex (7.0 denier) or less, 7.22 dtex (6.5 denier) or less, 6.67 dtex (6.0 denier) or less, 6.11 dtex (5.5 denier) or less, 5.56 dtex (5.0 denier) or less, 5.00 dtex (4.5 denier) or less, 3.89 dtex (3.5 denier) or less, 3.33 dtex (3.0 denier) or less, 2.78 dtex (2.5 denier) or less, or 2.22 dtex (2.0 denier). Further, the lower limit thereof may be, for example, 2.22 dtex (2.0 denier) or more, 2.78 dtex (2.5 denier) or more, 3.33 dtex (3.0 denier) or more, 3.89 dtex (3.5 denier) or more, 4.44 dtex (4.0 denier) or more, 5.00 dtex (4.5 denier) or more, 5.56 dtex (5.0 denier) or more, 6.11 dtex (5.5 denier) or more, 6.67 dtex (6.0 denier) or more, 7.22 dtex (6.5 denier) or more, or 7.78 dtex (7.0 denier) or more. Satisfying the above range may be more advantageous in implementing stable suction resistance of a filter for smoking articles and ensuring processability of a filter for smoking articles.

Although not particularly limited, the process controlled to ensure the above-described single fineness range may be the above-described spinning process. Alternatively, the above-described spinning, coagulation, washing and oil treatment processes may all be controlled to ensure the above-described single fineness range.

### <(f) Crimp application process>

The crimp application process is a process of applying pressure to the oil-treated lyocell multifilament through steam and/or a press roller to obtain a crimped multifilament, preferably, a crimped tow. The crimp application process may be referred to as a crimping process.

Through the crimping, lyocell multifilaments may be imparted with waves, and fibers may have bulky characteristics. The crimping may be performed using a known crimping device, such as one including a stuffer box and/or a steam box, and the usable crimping device is not particularly limited as long as it is a device capable of applying one or more of the pressures to be described below.

In some embodiments, the crimp application process may be performed by first supplying steam to the lyocell multifilament to preheat and swell the lyocell multifilament and then pressing the lyocell multifilament with a press roller to form wrinkles in the lyocell multifilament. In this case, a steam box may be used for steam supply, and this steam box may be located at the front end of the crimping device.

In some embodiments, the crimp application process may be performed in a manner in which pressurization of the lyocell multifilament by a press roller and steam supply are performed simultaneously.

In some embodiments, the crimp application process may be performed by first supplying steam to the lyocell multifilament to preheat and swell the lyocell multifilament and then simultaneously applying pressure and steam to the lyocell multifilament by a press roller.

In some embodiments, the crimp application process may be performed by applying steam of 0.98 to 19.61 $N/cm^2$ (0.1 to 2.0 $kgf/cm^2$) to the lyocell multifilament before introducing it into the crimping device (for example, press roller).

For example, steam of 1.96 $N/cm^2$ (0.2 $kgf/cm^2$) or more, 2.94 $N/cm^2$ (0.3 $kgf/cm^2$) or more, 3.92 $N/cm^2$ (0.4 $kgf/cm^2$) or more, 4.90 $N/cm^2$ (0.5 $kgf/cm^2$) or more or 5.88 $N/cm^2$ (0.6 $kgf/cm^2$) or more may be supplied by the steam box. Further, steam of 14.71 $N/cm^2$ (1.5 $kgf/cm^2$) or less, 13.73 $N/cm^2$ (1.4 $kgf/cm^2$) or less, 12.75 $N/cm^2$ (1.3 $kgf/cm^2$) or less, 11.77 $N/cm^2$ (1.2 $kgf/cm^2$) or less, 10.79 $N/cm^2$ (1.1 $kgf/cm^2$) or less, or 9.81 $N/cm^2$ (1.0 $kgf/cm^2$) or less may be supplied. When the steam supply or pressure is below the above range, crimps may not be formed easily. Further, when the steam supply or pressure exceeds the above range, the flexibility of the filament increases to apply excessive crimps within the crimping device, and thus the filament may not pass through the crimping device.

In some embodiments, the crimp application process may be performed by pressing the lyocell multifilament with a press roller to form wrinkles in the lyocell multifilament. Further, steam supply may not be performed prior to pressurization, steam supply may not be performed simultaneously with pressurization, or steam supply may not be performed both prior to pressurization and simultaneously with pressurization.

In some embodiments, the crimp application process may be performed by applying a pressure of 14.71 to 39.23 $N/cm^2$ (1.5 to 4.0 $kgf/cm^2$) to the lyocell multifilament introduced into the crimping device using a press roller.

For example, a pressure of 15.69 $N/cm^2$ (1.6 $kgf/cm^2$) or more, 16.67 $N/cm^2$ (1.7 $kgf/cm^2$) or more, 17.65 $N/cm^2$ (1.8 $kgf/cm^2$) or more, 18.63 $N/cm^2$ (1.9 $kgf/cm^2$) or more, 19.61 $N/cm^2$ (2.0 $kgf/cm^2$) or more, 20.60 $N/cm^2$ (2.1 $kgf/cm^2$) or more, 21.58 $N/cm^2$ (2.2 $kgf/cm^2$) or more, 22.56 $N/cm^2$ (2.3 $kgf/cm^2$) or more, 23.54 $N/cm^2$ (2.4 $kgf/cm^2$) or more, or 24.52 $N/cm^2$ (2.5 $kgf/cm^2$) or more may be applied to the lyocell multifilament through the press roller. Further, 38.25 $N/cm^2$ (3.9 $kgf/cm^2$) or less, 37.27 $N/cm^2$ (3.8 $kgf/cm^2$) or less, 36.29 $N/cm^2$ (3.7 $kgf/cm^2$) or less, 35.31 $N/cm^2$ (3.6 $kgf/cm^2$) or less, 34.33 $N/cm^2$ (3.5 $kgf/cm^2$) or less, 33.35 $N/cm^2$ (3.4 $kgf/cm^2$) or less, 32.37 $N/cm^2$ (3.3 $kgf/cm^2$) or less, 31.39 $N/cm^2$ (3.2 $kgf/cm^2$) or less, 30.41 $N/cm^2$ (3.1 $kgf/cm^2$) or less, 29.42 $N/cm^2$ (3.0 $kgf/cm^2$) or less, 28.44 $N/cm^2$ (2.9 $kgf/cm^2$) Below, a

pressure of 27.46 N/cm$^2$ (2.8 kgf/cm$^2$) or less, 26.48 N/cm$^2$ (2.7 kgf/cm$^2$) or less, 25.50 N/cm$^2$ (2.6 kgf/cm$^2$) or less, or 24.52 N/cm$^2$ (2.5 kgf/cm$^2$) or less may be applied by the press roller.

When the pressure of the press roller is below the above range, the desired number of crimps may not be formed sufficiently. Further, when the pressure of the press roller exceeds the above range, pressing force may be too strong, so that the filament may not be smoothly introduced into the crimping device or may not pass through the stuffer box. Wrinkles may be formed in the lyocell multifilament by the press roller providing the above pressure.

In some embodiments, a pressure of 0.98 to 19.61 N/cm$^2$ (0.1 to 2 kgf/cm$^2$) may be applied to the lyocell multifilament using an upper plate. Further, the upper plate may apply pressure to the lyocell multifilament when the lyocell multifilament passes through the press roller or is passing through the press roller.

For example, the pressure applied by the upper plate may be 1.96 N/cm$^2$ (0.2 kgf/cm$^2$) or more, 2.94 N/cm$^2$ (0.3 kgf/cm$^2$) or more, 3.92 N/cm$^2$ (0.4 kgf/cm$^2$) or more, or 4.90 N/cm$^2$ (0.5 kgf/cm$^2$) or more. Further, a pressure of 14.71 N/cm$^2$ (1.5 kgf/cm$^2$) or less, 13.73 N/cm$^2$ (1.4 kgf/cm$^2$) or less, 12.75 N/cm$^2$ (1.3 kgf/cm$^2$) or less, 11.77 N/cm$^2$ (1.2 kgf/cm$^2$) or less, 10.79 N/cm$^2$ (1.1 kgf/cm$^2$) or less, or 9.81 N/cm$^2$ (1.0 kgf/cm$^2$) or less may be applied by the upper plate.

Furthermore, when the pressure of the upper plate, serving to move up and down to provide uniform crimps after passing through the press roller, is less than 0.98 N/cm$^2$ (0.1 kgf/cm$^2$), the upper plate cannot be fixed due to the pressure inside the stuffer box, thereby causing the tow to stay in the stuffer box for a long time to prevent the continuity of a process from being maintained. When the pressure of the upper plate exceeds 19.61 N/cm$^2$ (2 kgf/cm$^2$), steam cannot be easily discharged inside the stuffer box, thereby causing the shape of crimps to become irregular.

In some embodiments, in the crimp application process, a doctor blade applying a preset pressure to the lyocell multifilament may be used. The doctor blade controls the residence time of the filaments introduced into the crimper, stuffer box, thereby contributing to the control of the number of crimps. This doctor blade may be located in the path of the lyocell multifilament pressed by the roller and then discharged at the roller pressure point.

In some embodiments, the crimp application process may be performed by applying a pressure of 0.98 to 19.61 N/cm$^2$ (0.1 to 2.0 kgf/cm$^2$) to the lyocell multifilament passing through the roller of the crimping device using the doctor blade.

For example, the pressure applied by the doctor blade may be 1.96 N/cm$^2$ (0.2 kgf/cm$^2$) or more, 2.94 N/cm$^2$ (0.3 kgf/cm$^2$) or more, 3.92 N/cm$^2$ (0.4 kgf/cm$^2$) or more, or 4.90 N/cm$^2$ (0.5 kgf/cm$^2$) or more. Further, a pressure of 14.71 N/cm$^2$ (1.5 kgf/cm$^2$) or less, 13.73 N/cm$^2$ (1.4 kgf/cm$^2$) or less, 12.75 N/cm$^2$ (1.3 kgf/cm$^2$) or less, 11.77 N/cm$^2$ (1.2 kgf/cm$^2$) or less, 10.79 N/cm$^2$ (1.1 kgf/cm$^2$) or less, or 9.81 N/cm$^2$ (1.0 kgf/cm$^2$) or less may be applied by the doctor blade.

In some embodiments, the crimp application process may be performed at a temperature in the range of 120°C to 250°C. When the temperature is too low, the shape stabilization effect of crimps is not good, and when the temperature is too high, the concentration of oil in the stuffer box increases, thus making it difficult to form crimps. Therefore, considering the above-described steam pressure or the like, the temperature may be appropriately controlled in a range of 130°C or higher, 140°C or higher, or 150°C or higher, and 200°C or lower, 180°C or lower, or 160°C or lower.

### <(g) Binder treatment process>

In some embodiments, the method may further include a process of treating the oil-treated lyocell multifilament or the lyocell multifilament obtained by the crimp application process with a binder.

When a filter for smoking articles is manufactured using a lyocell material (e.g., lyocell tow), a binder may be used additionally. The binder may increase the hardness of a filter for smoking articles including a lyocell material, thereby preventing a filter from being caught during a filter manufacturing process or a cigarette manufacturing process.

A method of coating a lyocell material with a binder is not particularly limited. For example, the oil treatment may be carried out by immersing the lyocell multifilaments in a bath filled with a binder (or a binder solution) so that the lyocell multifilaments are completely immersed in the binder. Alternatively, binder coating on the lyocell multifilament may be achieved by injecting (or spraying) a binder (or a binder solution) through a nozzle.

Since the types and components of available binders are as described above, a detailed description thereof will be omitted.

In some embodiments, the binder (or binder solution) may further include a solvent in addition to the above-described components. Examples of the solvent may include, but are not limited to, water, ethanol, propylene glycol, and/or glycerin. In some embodiments, the solvent is selected from the group consisting of water, ethanol, propylene glycol, glycerin, or a combination thereof. When the binder (or binder solution) includes a solvent, the content of the solvent may be, for example, about 20 to 80 wt% or about 40 to 60 wt% based on 100 wt% of the total weight of the binder (or binder solution).

The binder treatment may be performed at a level that can achieve the purpose of the above-described binder treatment. For example, the binder treatment may be performed so that the content of the binder satisfies a range of 20 wt% or less, for example, 8 to 15 wt%, based on 100 wt% of the oil and binder-treated lyocell multifilament. In this case, the content may refer to a dry weight after the solvent or liquid component that may be included in the binder has evaporated.

After the lyocell multifilament is coated with the binder, drying of the binder may performed. Although drying temperature is not particularly limited, for example, drying may be performed at room temperature (about 10 °C to 35 °C).

**<(h) Other processes>**

After crimp application, appropriate post-treatment may be additionally performed.

In an example, second oil treatment (g1) may be additionally performed. The second oil treatment may provide more flexibility to a lyocell tow. The second oil treatment may be performed in the same manner as or in accordance with (d) the above-described oil treatment process.

Specifically, the second oil treatment may be performed by applying an oil to the lyocell tow that has undergone a process using a crimper. This treatment may be advantageously utilized in various processes performed during the manufacturing of filters for smoking articles. For example, the second oil treatment may allow fibers and filters to be easily spread by air during a spreading process, while also restricting the breakage of fibers during a stretching process.

In some embodiments, the above-described second oil treatment may be performed before or after the binder treatment. Alternatively, the second oil treatment may be performed regardless of the binder treatment.

Even in cases where the above-described second oil treatment is performed, a second oil treatment process may be performed so that the content of oil or OPU in the material satisfies the above-described range.

In some embodiments, drying treatment (g2) may be performed additionally. The drying may be carried out, for example, at a temperature ranging from 100 °C to 130 °C. The drying treatment method or process is not particularly limited, and known technologies may be used. For example, this drying treatment may be achieved by applying hot air to the lyocell tow or passing the tow through or leaving the tow in a temperature-controlled room for a certain period of time.

In an aspect, the present disclosure provides a lyocell material obtained by a method for manufacturing a lyocell material as described above.

In an aspect, the present disclosure provides a lyocell material obtainable by a method for manufacturing a lyocell material as described above.

**[Smoking articles]**

Although not particularly limited, the lyocell material manufactured by the above method may be included in a smoking article. Smoking articles may be aerosol-generating articles. An aerosol-generating article may include an aerosol-generating material or an aerosol-forming substrate.

For example, a lyocell material may be included in a combustible cigarette. Further, the lyocell material may be, for example, included in a heating cigarette, and the heating cigarette may be used in conjunction with an aerosol generating device (not shown).

For example, when a smoking article is used as a heating smoking article, the smoking article may be inserted separately into the aerosol generating device. Here, the aerosol generating device includes a receiving groove capable of receiving an aerosol generating article, and, in addition, may include a heater for heating the aerosol generating article so as to generate an aerosol, a control unit for generally controlling the operation of the aerosol generating device, a battery for providing power used for operating the aerosol generating device, and a detector for recognizing that the aerosol generating article has been inserted into the aerosol generating device.

The smoking article may include a tobacco medium unit, a filter for the smoking article, and a wrapper, wherein the filter for the smoking article may be located at one end of the tobacco medium unit, for example at the rear end or front end of the tobacco medium unit. The tobacco medium unit and the filter for the smoking article may each include a single segment, or may each independently include a plurality of segments.

The tobacco medium unit includes a tobacco material, and the tobacco material includes nicotine. Further, the tobacco medium unit may additionally include one or more excipients.

The excipients may include a binder, a filler, and other additives. For example, a tobacco medium included in the tobacco medium unit may be manufactured in the form of granules including a tobacco material, an excipient, etc.

For example, a filler may be additionally included to maintain the shape, strength and mass of the tobacco medium unit constant. For example, the lyocell material may be included in the tobacco medium unit. Further, the lyocell material may be used as a filler.

The wrapper may be subdivided into a cigarette paper wrapping the tobacco medium unit, a filter wrapping paper wrapping the filter, and a tipping wrapper combining the tobacco medium unit and the filter.

**[Filter for smoking articles]**

A lyocell material may be used in a filter for smoking articles. The lyocell material may be a lyocell tow. In an example, the lyocell tow includes a lyocell multifilament to which crimps are applied.

According to an aspect, the present application relates to a filter for smoking articles. The filter for smoking article includes a lyocell material, and the lyocell material may be the same as that described above. Further, the filter for smoking articles may include a lyocell tow, and the lyocell tow may be the same as that described above.

Further, the lyocell material includes the oil in an amount of 0.1 wt% or more with respect to 100 wt% of the total weight of the lyocell material. Besides, the description of the oil component and content according to an embodiment of the present application is the same as those described above.

In some embodiments, the single fineness of filaments forming the lyocell multifilament may be 1.67 dtex to 8.89 dtex (1.5 to 8.0 denier). Specific figures are the same as those described above.

For example, the lyocell multifilament to which crimps are applied may be a lyocell material having a total fineness of 1,667 tex to 6,111 tex (15,000 to 55,000 denier), and, preferably, may be a lyocell tow. Specific figures are the same as those described above.

In an example, the lyocell multifilament to which crimps are applied may have crimps of 3.94 to 19.71 per centimeter (10 to 50 per inch). Specific figures are the same as those described above.

For example, the filter for smoking articles may further include a binder on the surface of the lyocell multifilament to which crimps are applied or between the lyocell multifilament to which crimps are applied. The binder may increase the hardness of a filter for smoking articles manufactured from tow, thereby preventing a filter from being caught during a filter manufacturing process or a cigarette manufacturing process. The description of the types, components and contents of available binders is the same as those described above.

In some embodiments, the filter for smoking articles may further include a wrapping paper (referred to as wrapper paper, filter paper or filter wrapping paper). For example, the wrapping paper may be a porous paper or non-porous paper capable of wrapping the above-described lyocell tow and maintaining the shape of a filter (e.g., a column or cylinder).

In some embodiments of the present application, the filter for smoking articles may have a preset shape and size.

For example, the filter may have a rod shape. For example, the filter for smoking articles may have a cylindrical shape.

Further, the filter may have a length of, for example, 10 mm to 50 mm. For example, the length of the filter may have a lower limit of 15 mm or more, 20 mm or more, 25 mm or more, 30 mm or more, 35 mm or more, 40 mm or more, or 45 mm or more, and may have an upper limit of 45 mm or less, 40 mm or less, 35 mm or less, 30 mm or less, 25 mm or less, 20 mm or less, or 15 mm or less.

In some embodiments of the present application, the filter having the above length may have a circular cross-section, and the circular cross-section may be a circumference of 10 mm to 40 mm. For example, the circumference of the filter may have a lower limit of 15 mm or more, 20 mm or more, 25 mm or more, 30 mm or more, or 35 mm or more, and may have an upper limit of 35 mm or less, 30 mm or less, 25 mm or less, 20 mm or less, or 15 mm or less.

In some embodiments, the filter for smoking articles may include a lyocell tow and a filter wrapping paper. Since the description of the lyocell tow and the filter wrapping paper is the same as that described above, it will be omitted.

The wrapping paper may be a porous paper or non-porous paper capable of wrapping the above-described lyocell tow and maintaining the shape of a filter (e.g., a column or cylinder).

For example, when a porous wrapping paper is used, the wrapping paper may have a porosity of 10 to 50,000 CU (Coresta Unit). Coresta Unit may be defined as a volume flow rate ($cm^3min^{-1}$) of air passing through 1 $cm^2$ of a substrate sample (i.e. porous wrapping paper) at a pressure difference of 1 kPa. For example, the lower limit of the porosity of the wrapping paper may be, for example, 1000 CU or more, 5000 CU or more, 10000 CU or more, 15000 CU or more, 20000 CU or more, 25000 CU or more, 30000 CU or more, 35000 CU or more, 40000 CU or more, or 45000 CU or more, and the upper limit thereof may be, for example, 45000 CU or less, 40000 CU or less, 35000 CU or less, 30000 CU or less, 25000 CU or less, or 20000 CU or less. In an embodiment of the present application, the wrapping paper may have a porosity within a range of 22,000 to 26,000 CU or 23,000 to 25,000 CU.

In some embodiments, the basis weight of the wrapping paper may be 15 to 60 $g/cm^2$. Specifically, the lower limit of the basis weight of the wrapping paper may be, for example, 20 $g/m^2$ or more, 25 $g/m^2$ or more, 30 $g/m^2$ or more, 35 $g/m^2$ or more, 40 $g/m^2$ or more, 45 $g/m^2$ or more, 50 $g/m^2$ or more, or 55 $g/m^2$ or more, and the upper limit thereof may be, for example, 55 $g/m^2$ or less, 50 $g/m^2$ or less, 45 $g/m^2$ or less, 40 $g/m^2$ or less, 35 $g/m^2$ or less, 30 $g/m^2$ or less, 25 $g/m^2$ or less, or 20 $g/m^2$ or less. In some embodiments of the present application, the wrapping paper may have a basis weight of 16 $g/m^2$ or more, 17 $g/m^2$ or more, 18 $g/m^2$ or more, 19 $g/m^2$ or more, 20 $g/m^2$ or more, or 21 $g/m^2$ or more, and 25 $g/m^2$ or less, 24 $g/m^2$ or less, 23 $g/m^2$ or less, 22 $g/m^2$ or less, or 21 $g/m^2$ or less.

Although not particularly limited, the weight of the rod-shaped filter may be 50 mg or more. For example, the weight of the filter may have, for example, a lower limit of 100 mg or more, 150 mg or more, or 200 mg or more, and may have an upper limit of 500 mg or less, 450 mg or less, 400 mg or less, 350 mg or less, 300 mg or less, 250 mg or less, or 200 mg or less.

Since descriptions of other filters for smoking articles and materials included therein are the same as those described above, they will be omitted.

**[Method of manufacturing filter for smoking articles]**

For example, the present application relates to a method of manufacturing a filter for smoking articles. This method is a method of manufacturing the above-described filter for lyocell smoking articles, and may be a method including a method of manufacturing the above-described lyocell material.

With regard to the method of manufacturing a filter for smoking articles, residual processes except for the process of manufacturing the filter are the same as those described for the above-described lyocell material, and therefore, a description thereof will be omitted. Besides, any description that overlaps with those described above will also be omitted.

The process of manufacturing a filter may be appropriately performed by those skilled in the art according to a known method. For example, a filter may be manufactured by forming a wrapping paper filled with a lyocell material into a rod shape. Alternatively, a filter may be manufactured by cutting a filter paper filled with a lyocell material having a rod shape to an appropriate length. A description of the wrapping paper is as the same as that described above.

Although not particularly limited, prior to filling a filter paper with a lyocell material, opening of the lyocell material or treatment with a plasticizer may be additionally performed. The surface area of the lyocell material may be increased by opening the lyocell material. For example, opening of the lyocell material may be performed by applying an external force in a length direction, width direction, and/or thickness direction.

Preferably, the lyocell material used in manufacturing a filter for smoking articles may be a lyocell tow.

Although not particularly limited, the filter for smoking articles may additionally include known cellulose acetate multifilaments at a level that does not hinder the purpose of the present disclosure. Cellulose acetate multifilaments may be blended with lyocell multifilaments. Cellulose acetate multifilaments may be included in a segment distinct from the segment including lyocell multifilaments.

**Advantageous Effects of Invention**

According to the present application, there are provided a lyocell material for a filter of smoking articles that can replace commercialized cellulose acetate (CA), and a filter for smoking articles including the same. Specifically, a lyocell dope having improved uniformity and spinnability is provided by controlling the properties of the pulp (e.g., angle of repose). The uniformity of lyocell monofilaments and lyocell multifilaments obtained by spinning from the above lyocell dope can be improved.

**Mode for the Invention**

Hereinafter, the operation and effects of the disclosure will be described in more detail through specific examples of the disclosure. However, this is presented as an example of the disclosure and the scope of the disclosure is not limited thereto in any way.

A lyocell material was prepared through the same process as those described in the following preparation example. Any conditions not specifically mentioned were made within the scope of the above description.

**[Preparation Example]**

Cellulose pulp having an average particle size adjusted to about 500 $\mu$m or less was mixed with an NMMO aqueous solution to prepare a lyocell dope for manufacturing a lyocell material having a concentration of 10 wt%.

Then, while maintaining a spinning temperature at 110°C in a spinning nozzle, a discharge amount and a spinning rate were appropriately adjusted, and the lyocell dope was spun. The filament-phase lyocell dope discharged from the spinning nozzle was supplied through an air gap section to a coagulation liquid (a coagulation liquid having a concentration of 75 wt% water and 25 wt% NMMO and a temperature of about 25°C) in a coagulation tank. In this case, cooling air in the air gap section first coagulates the lyocell dope at a temperature of 8 °C and an air flow rate of 200 N m$^3$/h. Further, the concentration of the coagulation liquid was continuously monitored using a sensor and a refractometer.

Then, the coagulated lyocell filaments were washed. Specifically, filaments were introduced into a towing roller, and NMMO remaining in the filaments was removed by a washing liquid sprayed from a washing device. Then, the washed filaments were immersed into a bath designed to have a preset oil concentration.

The filaments were treated with a pressure of 29.42 N/cm$^2$ (3 kgf/cm$^2$) by a nip roll installed in the discharge unit of the bath, and were introduced into a crimping machine to provide wrinkles. Specifically, the pressure of a press roller was set to 24.52 N/cm$^2$ (2.5 kgf/cm$^2$), and the pressure of a doctor blade was set to 4.90 N/cm$^2$ (0.5 kgf/cm$^2$) to prepare a lyocell material (lyocell tow).

The prepared lyocell tow has a single fineness of 2.22 to 8.88 dtex (2.0 to 8.0 denier), a total fineness of 3,333 to 6,110 tex (30,000 to 55,000 denier), and a crimp number of 5.91 to 18.05 ea/cm (15 to 55 ea/inch).

**Examples 1 to 4**

Lyocell materials were manufactured according to Preparation Example 1, and the angle of repose and dispersion degree of cellulose pulp were adjusted as shown in Table 1 below. Additionally, the floodability of pulp included in the lyocell dope was adjusted as shown in Table 1.

More specifically, the dispersity and floodability of the pulp were adjusted by controlling the grinding conditions during pulverization of pulp sheet. The grinding intensity, knife clearance, residence time, and rotational speed of the grinder were varied to regulate the particle size distribution and morphology. Depending on the grinding conditions, the degree of pulverization and the proportion of fibrous residues were altered, thereby enabling simultaneous adjustment of dispersity and floodability of the powder.

**Comparative Examples 1 to 3**

Lyocell materials were manufactured according to Preparation Example 1, and the angle of repose and dispersion degree of cellulose pulp were adjusted as shown in Table 1 below. Additionally, the floodability of pulp included in the lyocell dope was adjusted as shown in Table 1.

The angle of repose, dispersity, and floodability of the pulp were measured using a Multi Tester (model number: MT-02 (Measuring Instrument of Multi functional powder properties)) from Seishin Enterprise Co., Ltd. Additionally, the average particle size of the pulp was measured using a particle size analyzer from MALVEN (Model: Mastersizer 3000).

[Table 1]

|  |  | Angle of repose (°) | Dispersity (%) | Floodability | Average particle size ($\mu$m) |
|---|---|---|---|---|---|
| Example | 1 | 58 | 39 | 64 | 265 |
|  | 2 | 47 | 20 | 48 | 245 |
|  | 3 | 57 | 11 | 51 | 354 |
|  | 4 | 35 | 17 | 55 | 138 |
| Comparative Example | 1 | 68 | 45 | 62 | 114 |
|  | 2 | 58 | 57 | 56 | 212 |
|  | 3 | 35 | 49 | 82 | 167 |

**<Experiment 1: Non-uniformity evaluation>**

The hourly flow rate of pulp conveyed to a weight-loss feeder was measured. An average flow rate, a minimum flow rate, and a maximum flow rate were calculated based on the measured hourly flow rate. The average flow rate is defined as a flow rate per unit time. Based on the calculated values, flow rate non-uniformity (%) was calculated as shown in Equation 1 below.

Pulp flow rate non-uniformity = (maximum flow rate - minimum flow rate)/average flow rate $\times$ 100          [Equation 1]

Additionally, the average pressure, minimum pressure and maximum pressure of a lyocell dope were measured in the process of extrusion of the lyocell dope. Based on the calculated values, pressure non-uniformity (%) was calculated as shown in Equation 2 below.

Pressure non-uniformity = (maximum pressure - minimum pressure)/average pressure $\times$ 100          [Equation 2]

Additionally, fineness non-uniformity was measured from a 2 m sample taken from the lyocell material. The sample was left for 24 hours under conditions of constant temperature and constant humidity (20°C, 65%RH) prior to measurement of fineness non-uniformity, and was then stabilized by applying a load of 2 kg for about 5 seconds. The stabilized sample was cut to 90 cm and its weight was measured. The fineness of the sample was calculated according to Equation 3-1 below. A total of 50 samples were collected, and an average fineness, a minimum fineness, and a maximum fineness were determined from each measured fineness value. The fineness non-uniformity (%) was calculated according to Equation 3 below.

Fineness non-uniformity = (maximum fineness - minimum fineness)/average fineness $\times$ 100 [Equation 3]

[Equation 3-1]

Fineness of sample = weight of sample (g) x 10000

[Table 2]

| | | Pulp flow rate non-uniformity (%) | Pressure non-uniformity (%) | Fineness non-uniformity (%) |
|---|---|---|---|---|
| Example | 1 | 8.8 | 7.6 | 10.2 |
| | 2 | 11.1 | 8.6 | 11.3 |
| | 3 | 13.2 | 10.9 | 17.1 |
| | 4 | 14.7 | 12.7 | 18.2 |
| Comparative Example | 1 | 15.3 | 16.7 | 22.4 |
| | 2 | 15.6 | 18.9 | 22.8 |
| | 3 | 17.1 | 20.1 | 26.8 |

In the case of Examples 1 to 4, the flow rate non-uniformity was evaluated to be 15% or less. On the other hand, in the case of Comparative Examples 1 to 3, the flow rate non-uniformity was evaluated to be more than 15%. Considering that the lower the flow rate non-uniformity, the more uniformly the preparation process of the lyocell dope can be performed, it is expected that the lyocell dopes of Examples 1 to 4 can provide improved uniformity compared to the lyocell dopes of Comparative Examples 1 to 3.

Additionally, in the case of Examples 1 to 4, the pressure non-uniformity was evaluated to be 16% or less. On the other hand, in the case of Comparative Examples 1 to 3, the pressure non-uniformity was evaluated to be more than 16%. Considering that the lower the pressure non-uniformity, the more uniformly the extraction process of filaments can be performed, it is expected that the lyocell multifilaments of Examples 1 to 4 can provide improved uniformity compared to the lyocell multifilaments of Comparative Examples 1 to 3.

In the case of Examples 1 to 4, the fineness non-uniformity of the lyocell material was evaluated to be 11% or less. On the other hand, in the case of Comparative Examples 1 to 3, the fineness non-uniformity of the lyocell material was evaluated to be more than 22%. Referring to the fact that the more uniform the fineness, the more uniform the properties such as mechanical properties and filtering ability, of the lyocell material can be improved, it is expected that the lyocell materials obtained in Examples 1 to 4 can provide significantly improved uniformity compared to the lyocell materials obtained in Comparative Examples 1 to 3.

Therefore, referring to Table 2, it is expected that the uniformity will be evenly improved from the lyocell monofilament to the lyocell material in Examples 1 to 4 compared to Comparative Examples 1 to 3. Furthermore, it is expected that the filtering ability of the filter including each of the lyocell materials of Examples 1 to 4 will be improved.

**Claims**

1. A lyocell dope comprising: N-Methylmorpholine N-oxide (NMMO); and pulp dissolved in the NMMO, wherein an angle of repose of the pulp is 65° or less.

2. The lyocell dope of claim 1,
   wherein a dispersity of the pulp is 50% or less, and/or
   wherein a dispersity of the pulp is 10% or more.

3. The lyocell dope of claim 1,
   wherein a floodability of the pulp is 80 or less.

4. The lyocell dope of claim 1,
   wherein a floodability of the pulp is 40 or more.

**5.** The lyocell dope of claim 1,
wherein an average particle size of the pulp is 500 μm or less.

**6.** The lyocell dope of claim 1,
wherein a weight of the pulp is 5 parts by weight to 15 parts by weight, based on 100 parts by weight of a total weight of the lyocell dope.

**7.** A lyocell material comprising: a lyocell multifilament to which crimps are applied,
wherein the lyocell multifilament is obtained by spinning the lyocell dope according to any one of claims 1 to 7.

**8.** The lyocell material of claim 7,
wherein the number of the crimps is 3.94 ea/cm (10 ea/inch) to 23.64 ea/cm (60 ea/inch), and/or

wherein the lyocell multifilament has a single fineness of 1.67 dtex to 8.89 dtex (1.5 to 8.0 denier), and/or
wherein the lyocell material has a total fineness of 1,667 tex to 6,111 tex (15,000 to 55,000 denier).

**9.** The lyocell material of claim 7,
wherein the lyocell material is lyocell tow, and/or
wherein the lyocell material is used for a filter for smoking articles, and/or wherein the lyocell material is not used for tire cord nor for cloth.

**10.** A lyocell material comprising: a lyocell multifilament to which crimps are applied,
wherein a fineness non-uniformity represented by Equation 3 below is 22% or less:

fineness non-uniformity = (maximum fineness - minimum fineness) / average fineness × 100          [Equation 3]

In Equation 3, the maximum fineness is a largest fineness of samples, the minimum fineness is a smallest fineness of the samples, and the average fineness is an average value of the finenesses measured from the samples.

**11.** A filter for smoking articles, the filter comprising the lyocell material according to any one of claims 7 to 10.

**12.** A smoking article comprising the filter for smoking articles of claim 11.

**13.** A method of manufacturing a lyocell material, the method comprising: lyocell dope preparing, lyocell dope spinning; coagulating and lyocell multifilament obtaining; washing; oil treating; and crimping,
wherein a flow rate non-uniformity of pulp included in the lyocell dope is 15% or less.

**14.** A method of manufacturing a lyocell material, the method comprising: lyocell dope preparing, lyocell dope spinning; coagulating and lyocell multifilament obtaining; washing; oil treating; and crimping,
wherein a floodability of pulp included in the lyocell dope is 80% or less.

**15.** The method of claim 14,

wherein the lyocell dope includes N-Methylmorpholine N-oxide (NMMO) and pulp dissolved in the NMMO, and
wherein an angle of repose of the pulp is 65° or less.

Europäisches
Patentamt

European
Patent Office

Office européen
des brevets

# EUROPEAN SEARCH REPORT

**Application Number**

EP 25 20 1620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/286854 A1 (JEONG JONG CHEOL [KR] ET AL) 6 October 2016 (2016-10-06) * claims 1,2; example 1 * | 1-4,6-15 | INV. A24D3/06 A24D3/10 B01D39/18 D01F2/00 |
| X | US 2018/007952 A1 (JIN SANG WOO [KR] ET AL) 11 January 2018 (2018-01-11) * claims 1,7 * | 1-4,6-15 | |
| X | CA 2 438 445 A1 (HYOSUNG CORP [KR]) 26 June 2004 (2004-06-26) * page 15, lines 8-9 * * page 34, line 5 - line 9 * | 1-5, 13-15 | |
| X | KR 100 486 812 B1 (HYOSUNG CORP) 29 April 2005 (2005-04-29) * page 4, last paragraph; page 8 * | 1-5, 13-15 | |
| A | EP 1 358 371 B1 (THUERINGISCHES INST TEXTIL [DE]) 25 August 2010 (2010-08-25) * claim 1 * | 1-15 | |

**TECHNICAL FIELDS SEARCHED (IPC)**

A24D
D01C
B01D
D01F

The present search report has been drawn up for all claims

| Place of search | Date of completion of the search | Examiner |
|---|---|---|
| The Hague | 2 February 2026 | Villányi Kelemen, K |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                            

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 1620

This annex lists the patent family members relating to the patent documents cited in  the above-mentioned European search report.
The members are as contained in the European Patent Office EDP file on
The European Patent Office is in no way liable for these particulars which are merely given for the purpose of information.

02-02-2026

| Patent document cited in search report | | Publication date | Patent family member(s) | | Publication date |
|---|---|---|---|---|---|
| US 2016286854 | A1 | 06-10-2016 | CN | 105556012 A | 04-05-2016 |
| | | | EP | 3015579 A1 | 04-05-2016 |
| | | | EP | 4166701 A1 | 19-04-2023 |
| | | | ES | 2982535 T3 | 16-10-2024 |
| | | | JP | 6410815 B2 | 24-10-2018 |
| | | | JP | 2016538833 A | 15-12-2016 |
| | | | KR | 101455002 B1 | 03-11-2014 |
| | | | PL | 4166701 T3 | 29-07-2024 |
| | | | RU | 2016102643 A | 03-08-2017 |
| | | | US | 2016286854 A1 | 06-10-2016 |
| | | | US | 2020085094 A1 | 19-03-2020 |
| | | | WO | 2014208900 A1 | 31-12-2014 |
| US 2018007952 | A1 | 11-01-2018 | CN | 107109707 A | 29-08-2017 |
| | | | EP | 3241452 A1 | 08-11-2017 |
| | | | JP | 6535742 B2 | 26-06-2019 |
| | | | JP | 2018504897 A | 22-02-2018 |
| | | | KR | 20160081726 A | 08-07-2016 |
| | | | RU | 2664206 C1 | 15-08-2018 |
| | | | US | 2018007952 A1 | 11-01-2018 |
| | | | WO | 2016108508 A1 | 07-07-2016 |
| CA 2438445 | A1 | 26-06-2004 | AT | E521737 T1 | 15-09-2011 |
| | | | CA | 2438445 A1 | 26-06-2004 |
| | | | CN | 1511980 A | 14-07-2004 |
| | | | EP | 1433881 A2 | 30-06-2004 |
| | | | JP | 2004211277 A | 29-07-2004 |
| | | | US | 2004126577 A1 | 01-07-2004 |
| | | | US | 2005079348 A1 | 14-04-2005 |
| KR 100486812 | B1 | 29-04-2005 | NONE | | |
| EP 1358371 | B1 | 25-08-2010 | AU | 2474602 A | 24-06-2002 |
| | | | CN | 1481453 A | 10-03-2004 |
| | | | DE | 10062083 A1 | 05-09-2002 |
| | | | EP | 1358371 A1 | 05-11-2003 |
| | | | WO | 0248435 A1 | 20-06-2002 |

EPO FORM P0459

For more details about this annex : see Official Journal of the European Patent Office, No. 12/82